# EUROPEAN PATENT SPECIFICATION

(11) **EP 2 313 949 B1**
(45) Date of publication and mention of the grant of the patent: **18.01.2012**
(21) Application number: 09737491.2
(22) Date of filing: 25.09.2009
(51) Int. Cl.: H01R 25/16, H01R 33/88

(54) **SYSTEM AND METHOD FOR DISTRIBUTION OF ELECTRICAL POWER**
SYSTEM UND VERFAHREN ZUR VERTEILUNG VON ELEKTRISCHEM STROM
SYSTÈME ET PROCÉDÉ DE DISTRIBUTION D'ÉNERGIE ÉLECTRIQUE

(30) Priority: 14.01.2009 US 144663 P
(43) Date of publication of application: 27.04.2011
(73) Proprietor: Boston Retail Products, Inc., Wakefield, MA 02155-4949 (US)
(72) Inventor: ELLIS, Lawrence, A., Medford, MA 02155 (US)
(74) Representative: Driver, Virginia Rozanne
(86) International application number: PCT/US2009/058337
(87) International publication number: WO 2010/082962

(56) References cited:
- DE-C1- 19 504 957
- DE-U1- 9 215 847
- DE-U1- 29 815 346
- GB-A- 1 218 212

## Description

### FIELD OF THE INVENTION

The present invention relates to electrical power distribution and mounting systems and more particularly to a modular system for mounting and displaying electrically powered devices, where the mounting system provides for the distribution of power.

### BACKGROUND OF THE INVENTION

Display systems for electrically powered devices such as lamps, lights, consumer electronics, bulbs and electrically powered devices generally within a retail store environment normally requires a racking, gondola, shelving, cabinetry, frame, bin, wall, furniture or other support system that must be manufactured to fit a selected space and a selected number of different electrically powered devices on a custom or individual basis. Wiring, circuitry and power supply devices for connection to the electrically powered devices are typically installed on and throughout the support system on a custom hand-made or individual basis. The task of connecting a master or original source of power to the multitude of individual electrically powered devices that are typically mounted on a retail display system remains a labor intensive task of routing and connecting individual wires or collections of wires for each separate device along extensive distances that are disposed along overhead, underground or floor level locations.
Reference is made to DE 298 15 346 which seeks to address issues for mounting decorative lamps which require electrical connections.
According to DE-U-298-15-346 an electrical power distribution and mounting system comprises a housing with a mounting wall having a front side, a rear side, and a plurality of apertures arranged in a select pattern.
Power delivery contacts extend along the rear side of the mounting wall and are uninsulated, such that they can convey power from an electrical connector to a lamp via the apertures.
Both the electrical connector and the lamp can make contact with the power delivery contacts by being inserted into the apertures from the front side of the wall.
Lamps can easily be pushed into the apertures by hand, whereupon the contacts of the lamp are placed in contact with the power delivery contact. The lamps are held in place by the apertures.

### SUMMARY OF THE INVENTION

In accordance with the invention, there is provided an electrical power distribution and mounting system as claimed in claim 1.

The power delivery members are typically mounted on the rear side of the mounting wall and the power delivery contacts and the ground contact are all arranged such that manual engagement with the power delivery contacts through an aperture from a position from the front side of the mounting wall is prevented. The electrically powered devices typically have a base having two or more mounting pins protruding from the base in a pattern complementary to the select pattern of the apertures in the mounting wall.

The mounting pins preferably protrude from the base of the electrically powered devices such that the two or more mounting pins of the base are simultaneously insertable through two apertures from the front side of the mounting wall;
the mounting pins and the apertures being adapted for retention of the received mounting pins against lateral or axial movement of the pins out of the apertures;
the mating contacts being arranged on the electrically powered device and the electrical power delivery contacts being arranged on the rear side of the mounting wall for electrically conductive engagement between the matting contacts and the power delivery and ground contacts during the course of insertion of the mounting pins through the two apertures. At least one of the mounting pins preferably comprises a shaft and a head connected to the end of the shaft, the shaft and the head having selected configurations, the apertures in the mounting wall having a first portion complementary to the head configuration for receiving the head and a second portion complementary to the shaft configuration for receiving the shaft; and, the head of the at least one pin forming an interference fit against the second portion of the primary aperture to mount the base of the electrically powered device on the mounting wall.

The primary aperture is, in an embodiment, adapted to receive and retain the primary pin against lateral or axial movement out of the primary aperture, the primary pin being adapted to cooperate with the primary aperture against lateral or axial movement of the primary pin out of the primary aperture once received.

Typically, the primary pin comprises a shaft and a head connected to the end of the shaft, the shaft and the head having selected configurations, the primary aperture having a first portion complementary to the head configuration for receiving the head and a second portion complementary to the shaft configuration for receiving the shaft; and,
the head of the primary pin forming an interference fit against the second portion of the primary aperture to mount the support member of the electrically powered device on the wall.

In such an embodiment, the electrically powered device preferably comprises an electrically powered fixture mounted to a support member;
the primary pin being rigidly connected to the support member and the primary aperture is formed in the wall of the housing; and,
the primary aperture, the pin and the power delivery member being arranged relative to each other so that the complementary mating contacts are routed into engagement with the power delivery and ground contacts upon receipt of the primary pin within the primary aperture.

Most preferably, the primary pin is rigidly connected to the electrically powered device and the primary aperture is formed within the mounting wall, the primary pin housing the complementary mating contacts of the electrically powered device, the complementary mating contacts being received through the primary aperture together with receipt of the primary pin through the primary aperture.

In an embodiment, the pins are preferably attached to the electrically powered device and the apertures are disposed in the wall of the housing.

The plurality of apertures disposed within the mounting wall are preferably arranged such that the primary and second pins of the electrically powered device are receivable within a plurality of different pairs of the plurality of apertures, additional power delivery members being mounted on the rear side of the mounting wall in an arrangement to enable engagement of the mating contacts with power delivery contacts via each one of the plurality of apertures.

The electrically powered devices typically have a third pin, the complementary mating contacts being housed within the third pin, the third pin being receivable through a complementary aperture formed in the wall of the housing, the primary, second and complementary apertures being arranged on the wall and the primary, second and third pins being arranged on the support member such that the pins are all receivable within the apertures to route or guide the complementary mating contacts into engagement with the power delivery contacts upon receipt of the pins within the apertures.

The mounting wall typically has a plurality of apertures disposed within the mounting wall in an arrangement such that the primary and second and complementary pins of the electrically powered device are receivable within a plurality of different sets of three of the plurality of apertures.

In such an embodiment, at least two of the pins and the respective apertures in which the at least two pins are received are adapted to receive and retain the at least two pins against lateral or axial movement out of the respective apertures.

The system preferably includes at least two power delivery members arranged on the rear side of the mounting wall such that at least two electrically powered devices are independently mountable in a stable position on the front side of the mounting where the complementary mating contacts of the two electrically powered devices are all engaged with a corresponding power delivery and ground contact of the two respective power delivery members when each of the at least two electrically powered devices are fully mounted in the stable position on the front side of the mounting wall.

In such an embodiment, each of the power delivery contacts of each of the power delivery members is typically connected to a common source of electrical power.

Most preferably, the complementary mating contacts of the electrically powered device include a spring mechanism that maintains the mating contacts in engagement with the power delivery and ground contact.

Typically, the mounting wall comprises a thin sheet of rigid material having a height and a width and one or more struts disposed at one more vertically spaced positions along the height, the struts being attached to multiple positions extending across the width of the sheet.

In another aspect of the invention there is provided a method according to claim 18.

Such a method typically further comprises providing the electrically powered device with a primary pin in an arrangement that enables the primary pin to be received within a primary mounting aperture in the mounting wall; and,
forming the primary aperture into a configuration that prevents lateral or axial movement of the primary pin out of the primary aperture on receipt of the pin within the primary aperture.

In another aspect of the invention there is provided an electrical power distribution and mounting system, the system comprising:
a housing comprising a mounting wall having a front side, a rear side and a plurality of apertures arranged in a select pattern;

### BRIEF DESCRIPTION OF THE DRAWINGS

Fig. 1 is perspective view of a system according to the invention showing two display panels electrically connected to each other, each of which has one or more electrically powered devices mounted on a wall surface of the panels via a mounting system according to the invention;

Fig. 2 is a sectional view taken along line 2-2 of Fig. 1;

Fig. 3 is a sectional view taken along line 3-3 of Fig. 1;

Fig. 4 is an exploded partially sectional perspective view of the portion of the Fig. 1 system shown in Figs. 2 and 3;

Fig. 5 is an exploded perspective view of a power delivery member component of the Fig. 1 system showing an embodiment of the mounting of the support member for the positive and negative and ground electrical delivery contact components of the system;

Fig. 6 is a front exploded perspective view of an embodiment of an electrically powered device showing the device comprised of a light fixture mounted to a support member;

Fig. 7 is a front exploded perspective view of the support member and electrical receiving contact components of the Fig.6 electrically powered device showing details of the arrangement and configuration of the electrical contacts and their mounting on the support member;

Fig. 8 is a side cross sectional view of a portion of the system of Fig. 1 showing the electrical receipt contact components of the electrically powered device in a first position upon initial insertion of the contact component through a complementary receiving aperture in a wall of one of the panels where the positive and negative receipt contacts are spring biased to be urged toward each other into contact with the power delivery contacts;

Fig. 8a is a side cross sectional view of a portion of an alternative to the system of Fig. 1 showing the electrical receipt contact components of the electrically powered device in a first position upon initial insertion of the contact component through a complementary receiving aperture in a wall of one of the panels where the positive and negative receipt contacts are spring biased to be urged away from each other into contact with the power delivery contacts;

Fig. 9 is top cross sectional view along the center of the Fig. 8 positional view showing an initial position, upon initial insertion into a panel aperture, of the positive, negative and ground receipt contacts of the electrically powered device relative to the positive, negative and ground delivery contacts of a power delivery member mounted within one of the panels of the Fig. 1 system;

Fig. 9a is top cross sectional view along the center of the Fig. 8a positional view showing an initial position, upon initial insertion into a panel aperture, of the positive, negative and ground receipt contacts of the electrically powered device relative to the positive, negative and ground delivery contacts of a power delivery member mounted within one of the panels of the Fig. 1 system;

Fig. 9b is a perspective schematic view of the Figs. 8a and 9a electrically powered device showing the corresponding positive and negative contacts embedded within a slot provided in a central guide pin or protrusion for physical protection of the contacts;

Fig. 10 is a side cross sectional view similar to Fig. 8 showing a subsequent position of more advanced insertion of the receipts contact components of the electrically powered device through a complementary receiving aperture in a wall of one of the panels;

Fig. 10a is a side cross sectional view similar to Fig. 8a showing a subsequent position of more advanced insertion of the receipts contact components of the electrically powered device through a complementary receiving aperture in a wall of one of the panels;

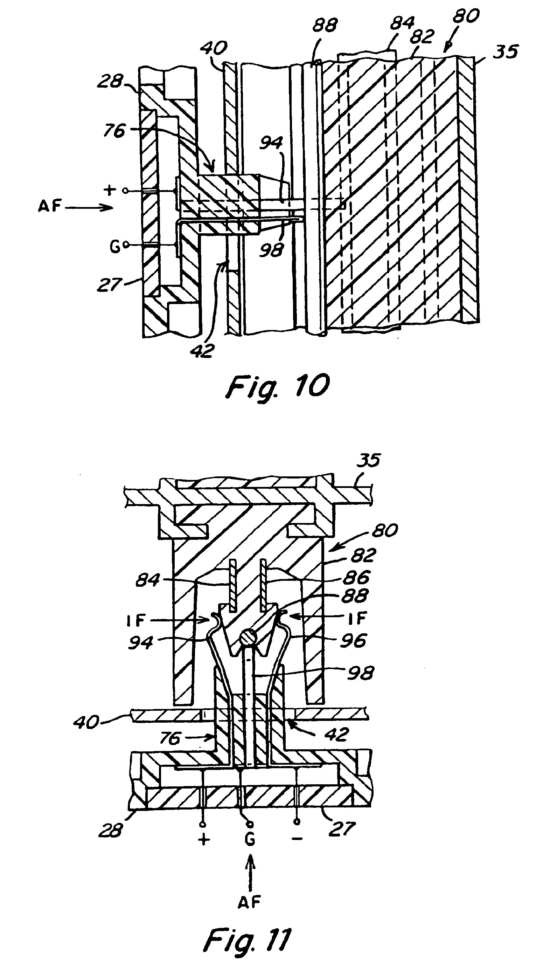

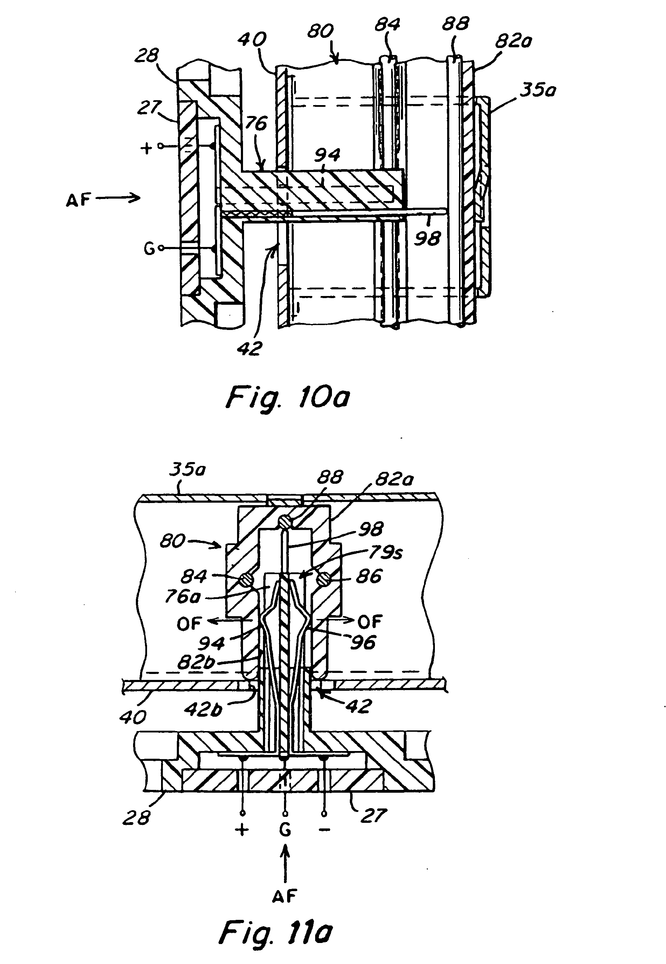

Fig. 11 is top cross sectional view along the center of the Fig. 10 positional view showing more details of the subsequent more advanced insertion position of the receipt contacts of the electrically powered device relative to the delivery contacts of the power delivery member, in particular showing that the ground contacts of the receipt and delivery members are guided into electrically conductive contact with each other prior to the positive and negative contacts of the receipt and delivery members coming into conductive contact with each other during the course of insertion of the receipt contacts through the wall aperture;

Fig. 11 a is top cross sectional view along the center of the Fig. 10a positional view showing more details of the subsequent more advanced insertion position of the receipt contacts of the electrically powered device relative to the delivery contacts of the power delivery member, in particular showing that the ground contacts of the receipt and delivery members are guided into electrically conductive contact with each other prior to the positive and negative contacts of the receipt and delivery members coming into conductive contact with each other during the course of insertion of the receipt contacts through the wall aperture;

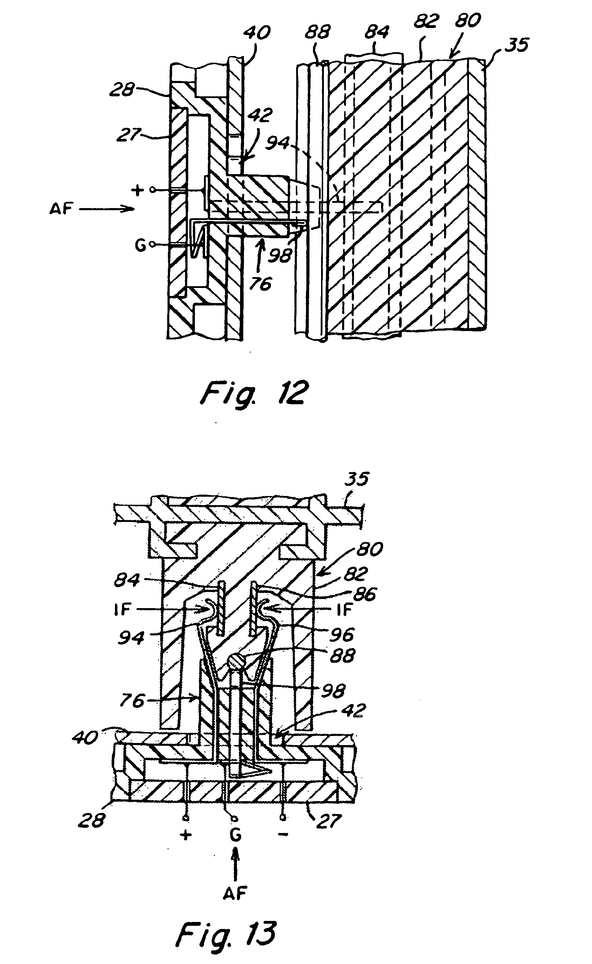

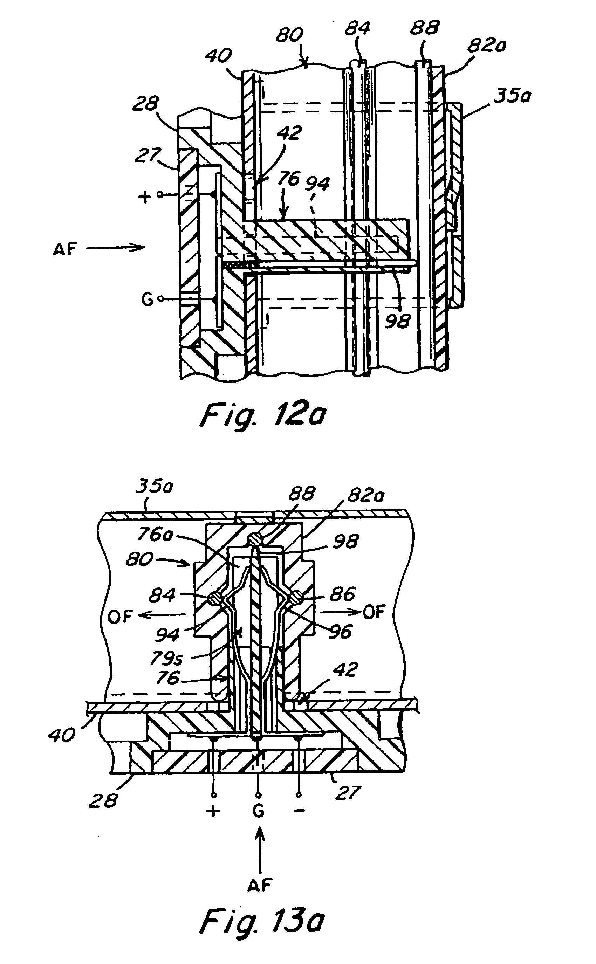

Fig. 12 is a side cross sectional view similar to Fig. 10 showing a further more advanced and essentially final insertion position of the receipt contact components of the electrically powered device through the complementary receiving aperture in the wall of one of the panels;

Fig. 12a is a side cross sectional view similar to Fig. 10a showing a further more advanced and essentially final insertion position of the receipt contact components of the electrically powered device through the complementary receiving aperture in the wall of one of the panels;

Fig. 13 is top cross sectional view along the center of the Fig. 12 positional view showing more details of the final insertion position of the receipt contacts of the electrically powered device relative to the delivery contacts of the power delivery member, in particular showing that all of the receipt and delivery members have been guided into electrically conductive contact with each other upon final fully advanced insertion of the receipt contacts through the wall aperture;

Fig. 13a is top cross sectional view along the center of the Fig. 12a positional view showing more details of the final insertion position of the receipt contacts of the electrically powered device relative to the delivery contacts of the power delivery member, in particular showing that all of the receipt and delivery members have been guided into electrically conductive contact with each other upon final fully advanced insertion of the receipt contacts through the wall aperture;

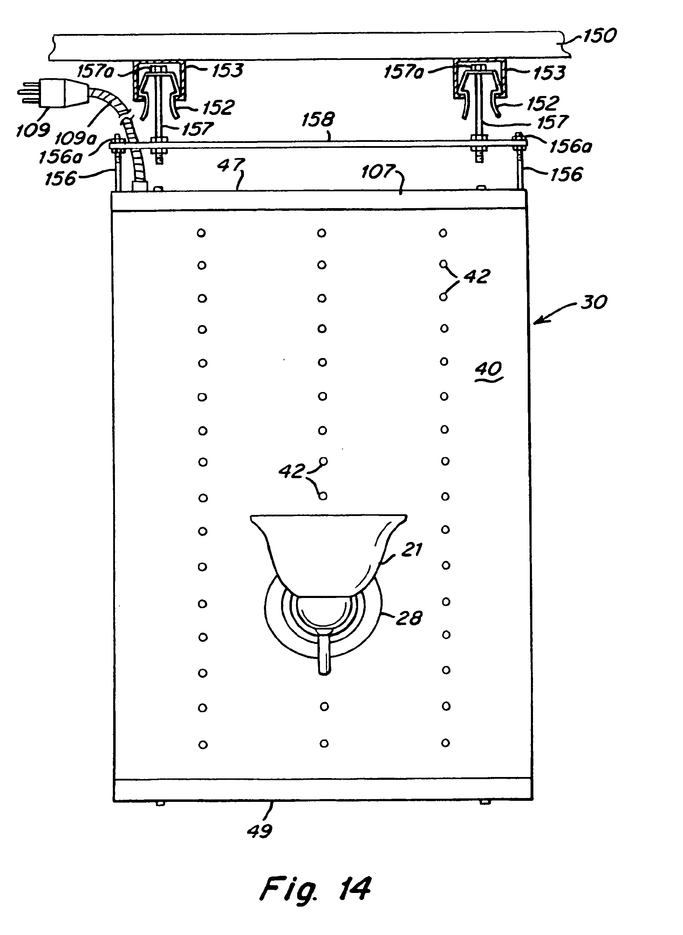

Fig. 14 is a side view of an embodiment of a system according to the invention showing a single panel having readily attachable and detachable mounting members for mounting the panel in a vertically disposed position from an overhead or ceiling mount member;

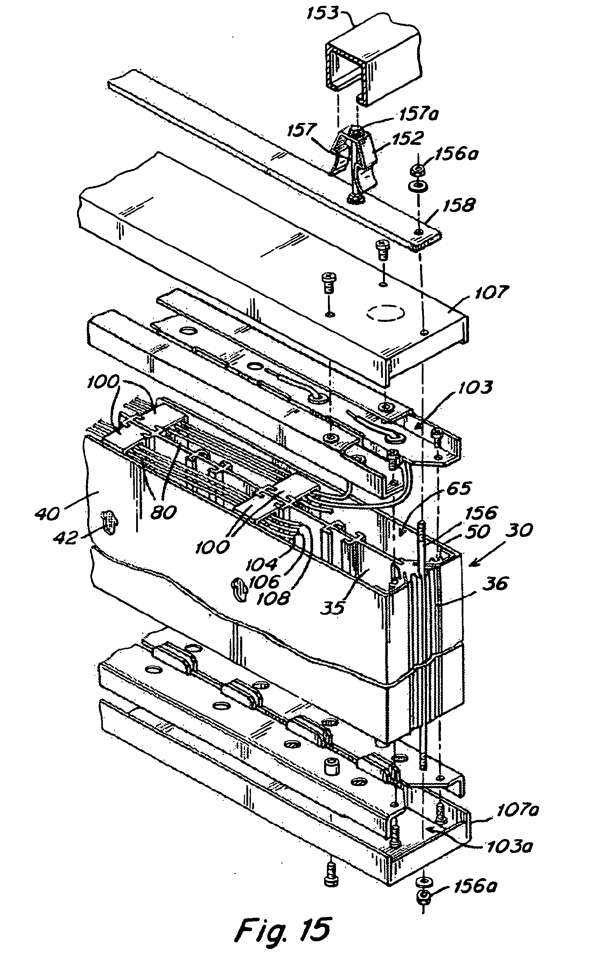

Fig. 15 is an exploded perspective cut away view of the top, middle and bottom sections of a panel of the Fig. 14 embodiment showing details of the routing of the electrical power delivery wiring through a top compartment of the panel and showing mechanical connecting components of the top, middle and bottom housing components of the system;

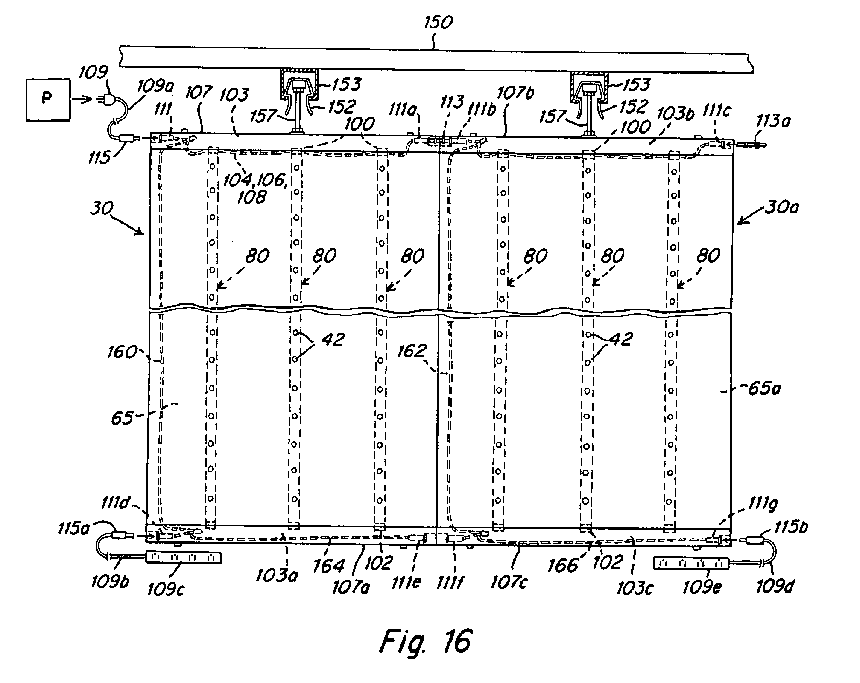

Fig. 16 is a side view of an embodiment of a system according to the invention showing two overhead mounted panels electrically connected to each other in a side end to side end configuration, and showing the power wiring extending laterally from side to side along the length of both the top and bottom compartments of the two panels;

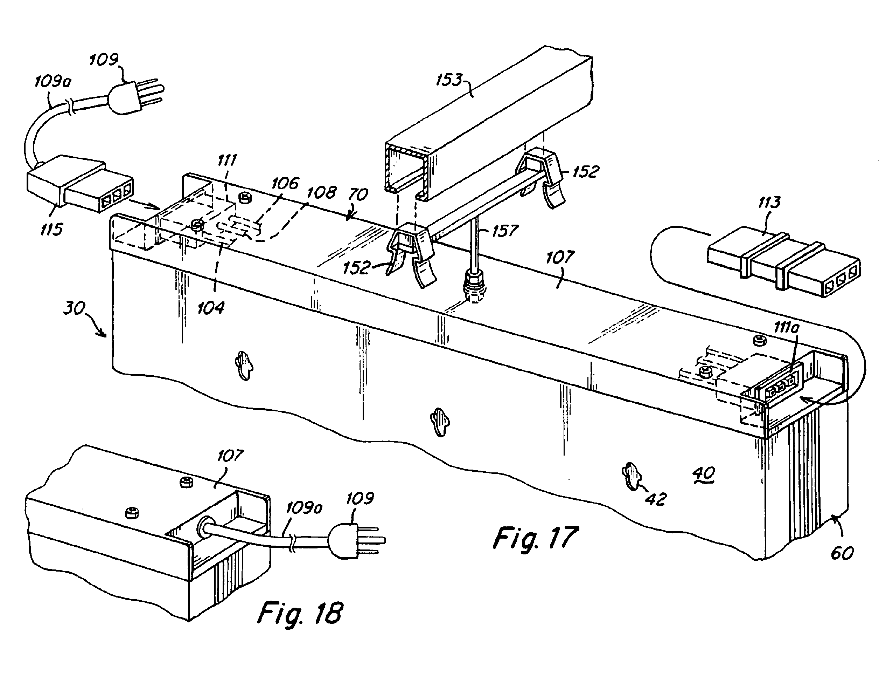

Fig. 17 is a perspective exploded view of the top compartment end of a panel component of a system according to the invention showing electrical input and output connector components on opposing side ends of the top compartment and showing an example of the components and arrangement of readily connectable and disconnectable overhead mounting arrangement similar to the overhead mounting arrangement shown in Figs. 15 and 16;

Fig. 18 is a perspective view of an alternative wiring connector component extending from the end of the top compartment of a panel component of a system according to the invention;

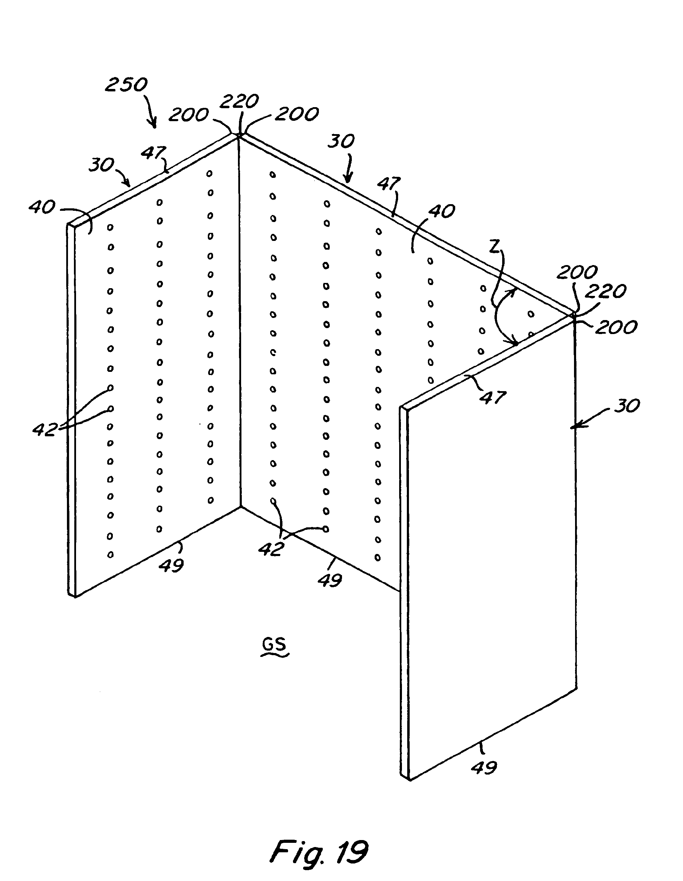

Fig. 19 is a perspective view of three panels according to the invention that are mechanically connected along their side edges in one exemplary arrangement that enables the connected panels to be mounted on their bottom ends in a stable freestanding position on a floor or ground surface for use as a display for devices mounted on one or more of the walls of the system;

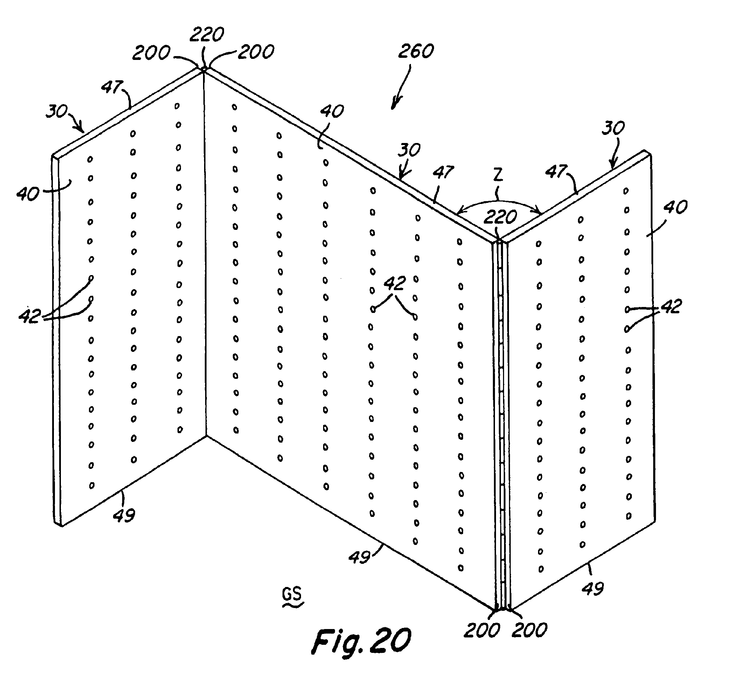

Fig. 20 is a perspective view of three panels according to the invention that are mechanically connected along their side edges in another exemplary arrangement that enables the connected panels to be mounted on their bottom ends in a stable freestanding position on a floor or ground surface for use as a display for devices mounted on one or more of the walls of the system;

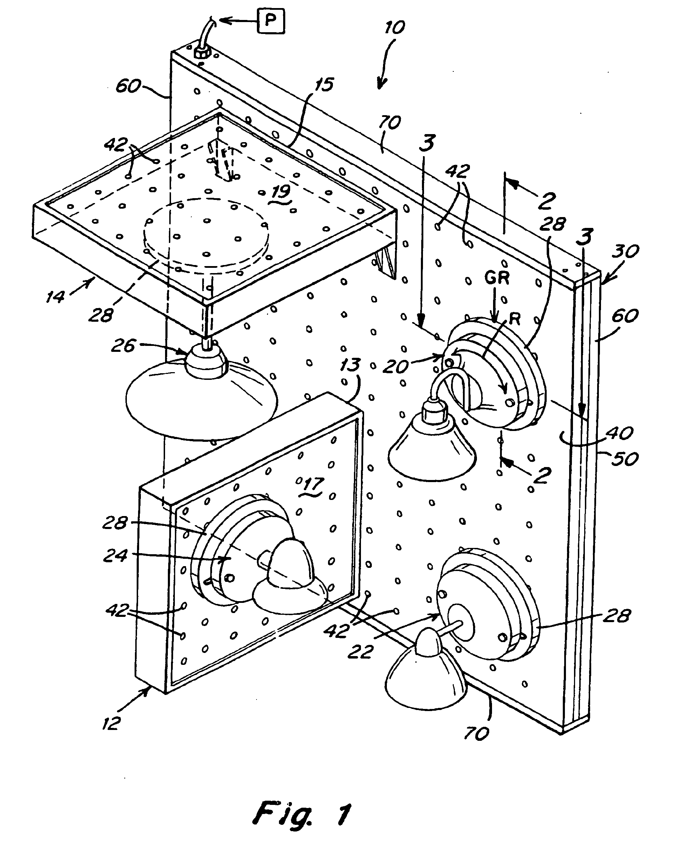

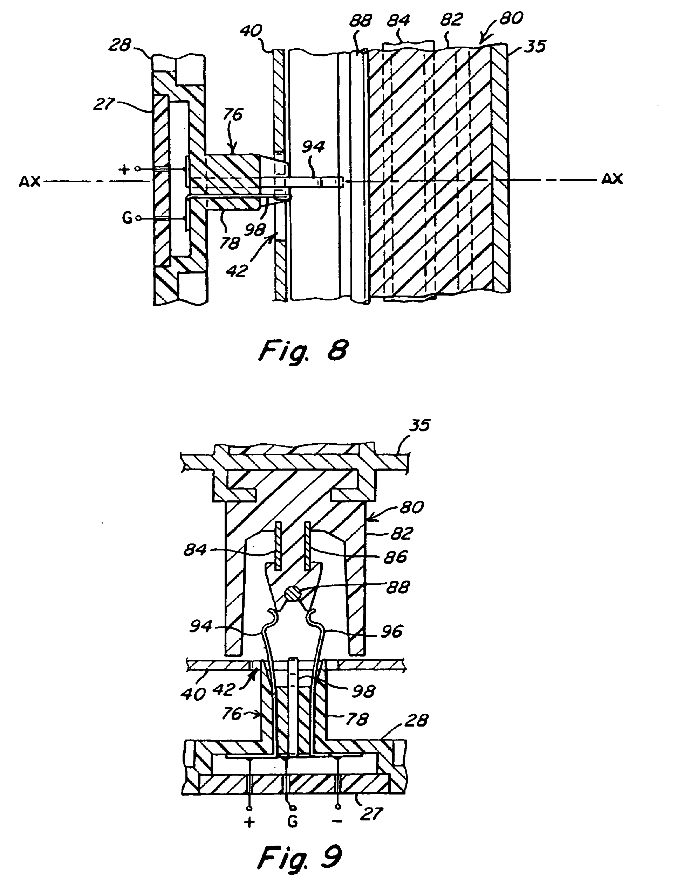

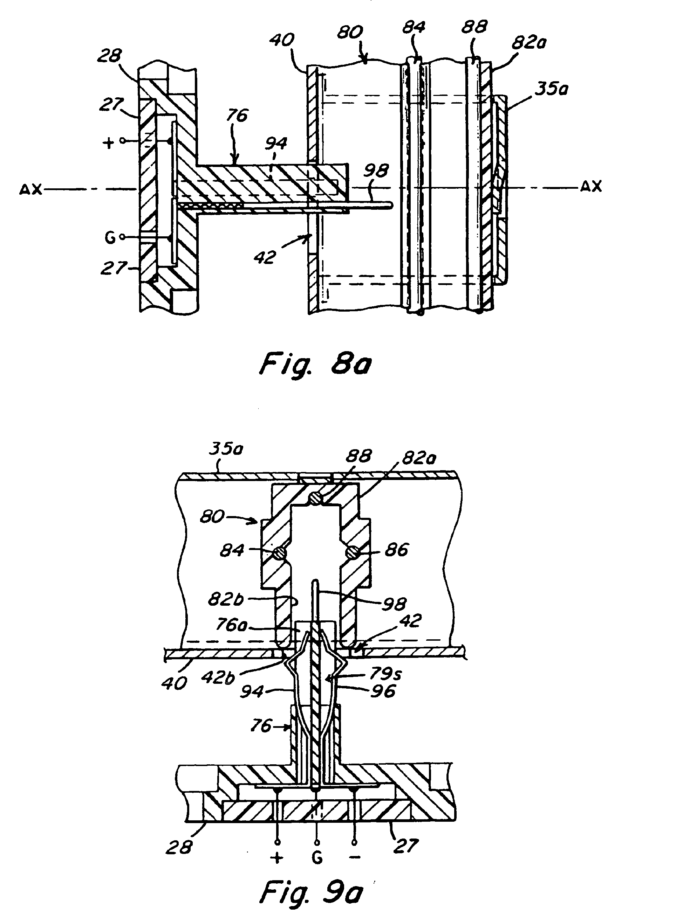

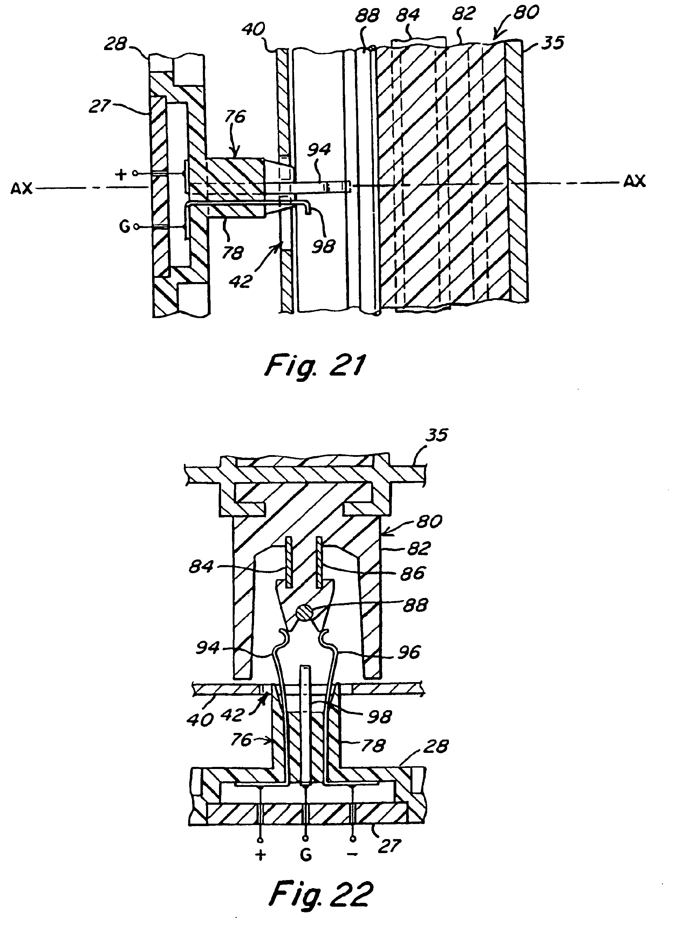

Fig. 21 is a side cross sectional view of a portion of an alternative embodiment of the system of Fig. 1 showing the electrical receipt contact components of the electrically powered device in a first position upon initial insertion of the contact component through a complementary receiving aperture in a wall of one of the panels, the ground receiving contact in this embodiment having a longer length than the ground contact of the Figs. 8-13 embodiment such that the ground contact bends at its distal end against the ground delivery member contact;

Fig. 22 is top cross sectional view along the center of the Fig.21 positional view showing an initial position, upon initial insertion into a panel aperture, of the positive, negative and ground receipt contacts of the electrically powered device relative to the positive, negative and ground delivery contacts of a power delivery member mounted within one of the panels of the Fig. 1 system;

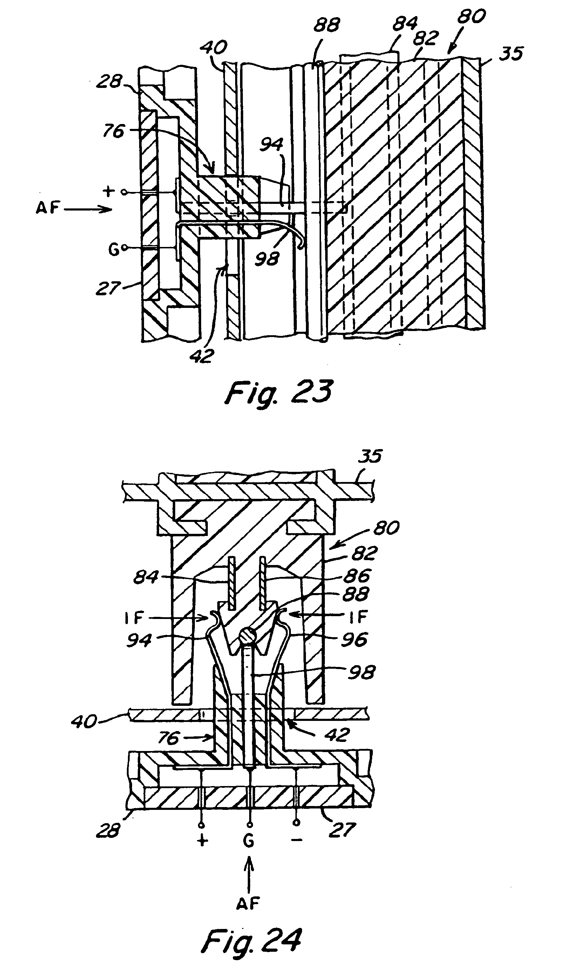

Fig. 23 is a side cross sectional view similar to Fig. 21 showing a subsequent position of more advanced insertion of the receipts contact components of the electrically powered device through a complementary receiving aperture in a wall of one of the panels showing the distal end of the ground receiving contact in a partially bent position on contact with the ground delivery contact;

Fig. 24 is top cross sectional view along the center of the Fig. 23 positional view showing more details of the subsequent more advanced insertion position of the receipt contacts of the electrically powered device relative to the delivery contacts of the power delivery member, in particular showing that the ground contacts of the receipt and delivery members are guided into electrically conductive contact with each other prior to the positive and negative contacts of the receipt and delivery members coming into conductive contact with each other during the course of insertion of the receipt contacts through the wall aperture;

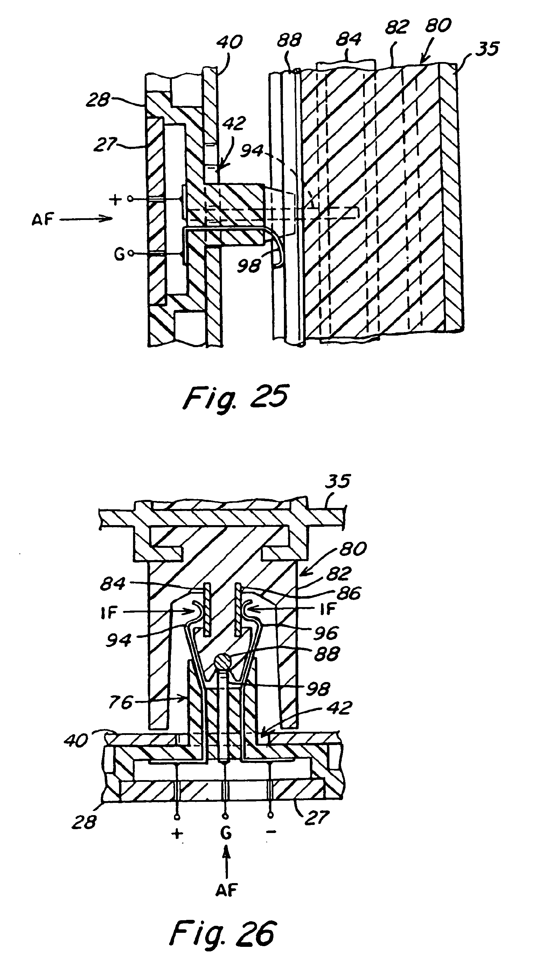

Fig. 25 is a side cross sectional view similar to Fig. 23 showing a further more advanced and essentially final insertion position of the receipt contact components of the electrically powered device through the complementary receiving aperture in the wall of one of the panels, showing the distal end of the ground receiving contact in a fully final bent position against the ground contact of the power delivery member;

Fig. 26 is top cross sectional view along the center of the Fig. 25 positional view showing more details of the final insertion position of the receipt contacts of the electrically powered device relative to the delivery contacts of the power delivery member, in particular showing that all of the receipt and delivery members have been guided into electrically conductive contact with each other upon final fully advanced insertion of the receipt contacts through the wall aperture;

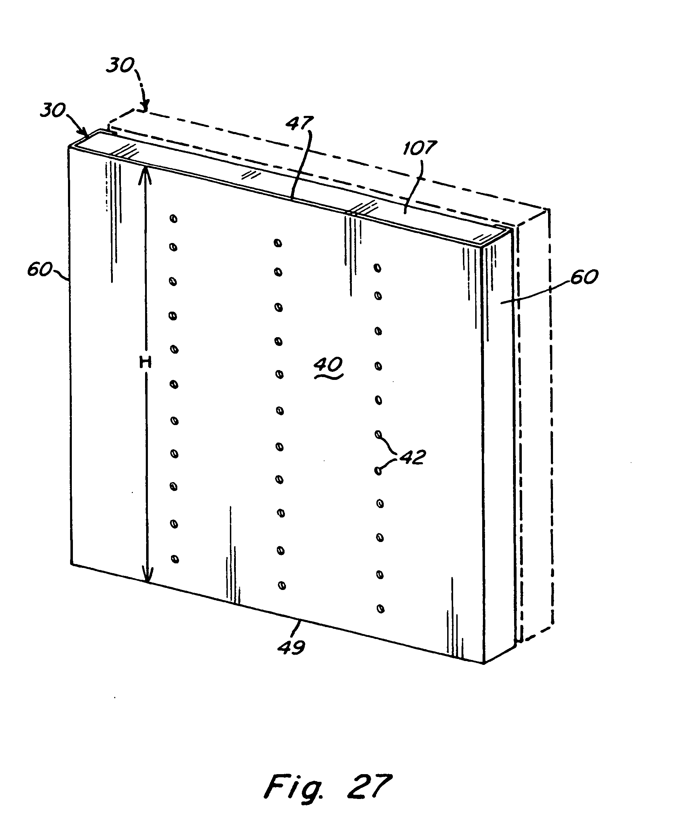

Fig. 27 is a front perspective view of a panel or housing according to the invention showing the front and side walls formed from a unitary sheet of metal;

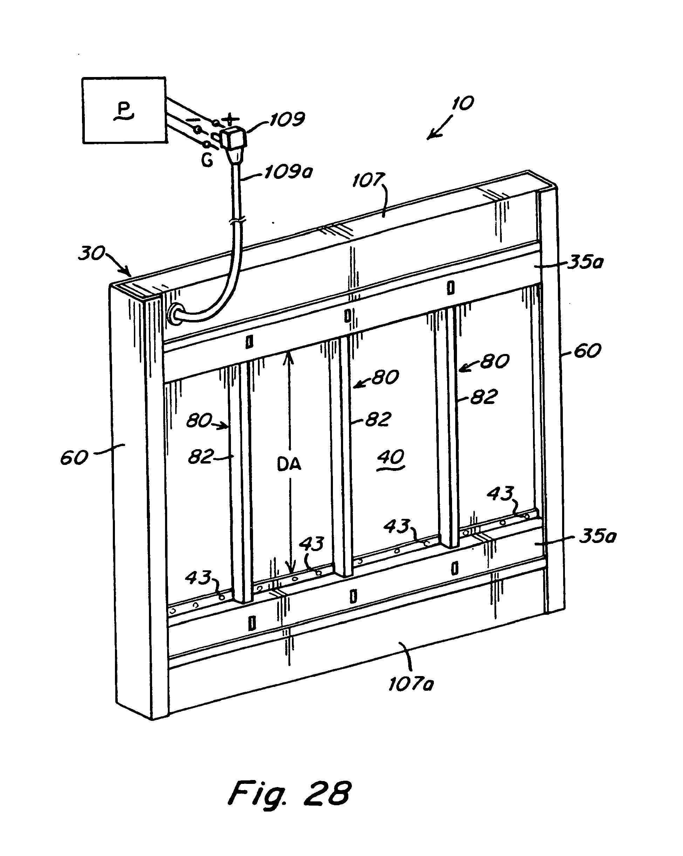

Fig. 28 is a rear perspective view of the Fig. 27 panel showing an arrangement of power delivery strips mounted by the struts in axial alignment with successive vertical rows of apertures;

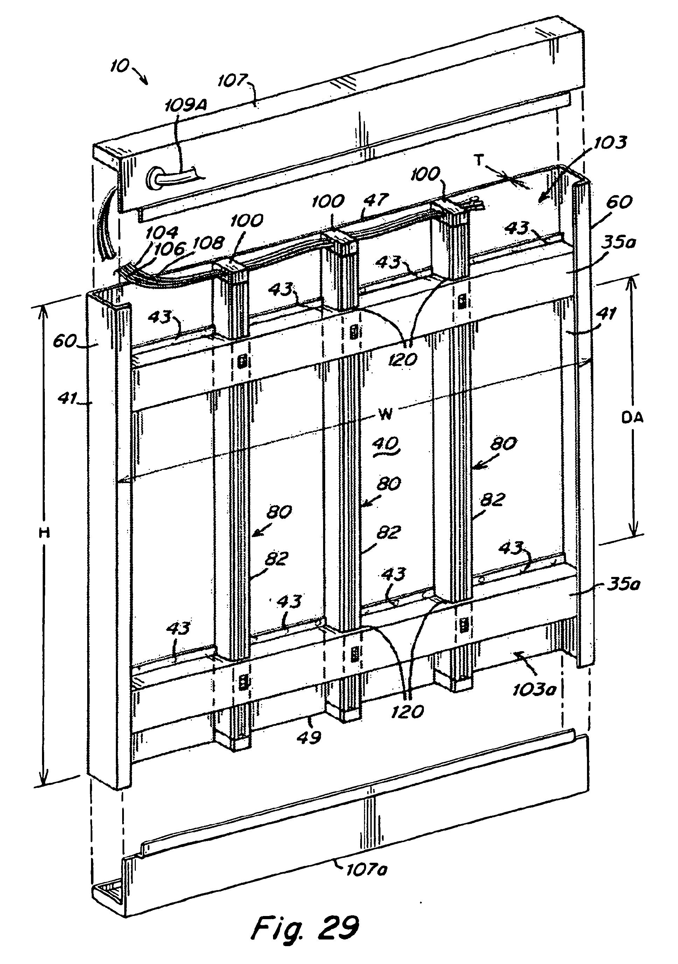

Fig. 29 is an exploded view of Fig. 28 showing the top end enclosure exploded from its position over the top wiring channel and showing an arrangement of electrical power delivery wires with serially connected circuit splitters mounted on the top ends of the power delivery members and for electrical connection of the power source to the power delivery contacts of the power delivery members;

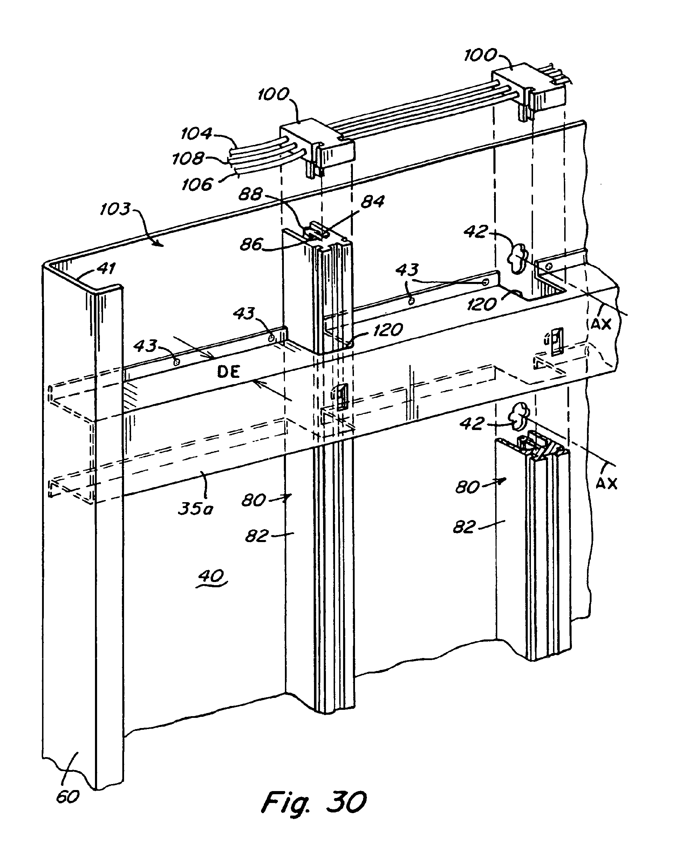

Fig. 30 is a fragmentary enlarged view of a portion of Fig. 29 showing the arrangement and mounting configuration of the power delivery members in axial alignment with the mounting apertures of the front wall.

### DETAILED DESCRIPTION

Fig. 1 shows one example of a electrical power distribution and mounting system 10 according to the invention comprised of a first power delivery and mounting panel 30 mounted in a generally vertical disposition either on a ground surface, on a wall or other support or by hanging from an overhead support (not shown). The first panel 30 is shown having two electrically powered devices 20 mounted in stable positions on the outside surface of a wall 40 having multiple spaced receiving apertures 42 positioned over/about the area of the wall 40. The panel 30 comprises a housing structure having opposing spaced mounting walls 40, sidewalls 60 and top and bottom walls 70 that collectively enclose a space 65 between the walls 40, 60, 70 that is inaccessible by hand.

As shown in Fig. 1, two electrically powered devices 20, 22, e.g. light fixtures are mounted on the wall surface 40. In addition, two separate electrical power distribution and mounting panels or housings 12, 14, constructed of the same functional components as panel 30, are mounted on or to the main panel or housing 30. As shown, the separate panels12, 14 each have separate electrically powered devices 24, 26 mounted on/to their own exterior wall surfaces in the same manner as devices 20, 22 are mounted on or to the main panel 30. Each of the devices 20, 22 and secondary panels 12, 14 are electrically connected to a complementary power delivery member housed within the interior space of the main panel 30 such that electrical power is simultaneously delivered to all of the devices 20, 22, 24, 26 by a single original source of power.

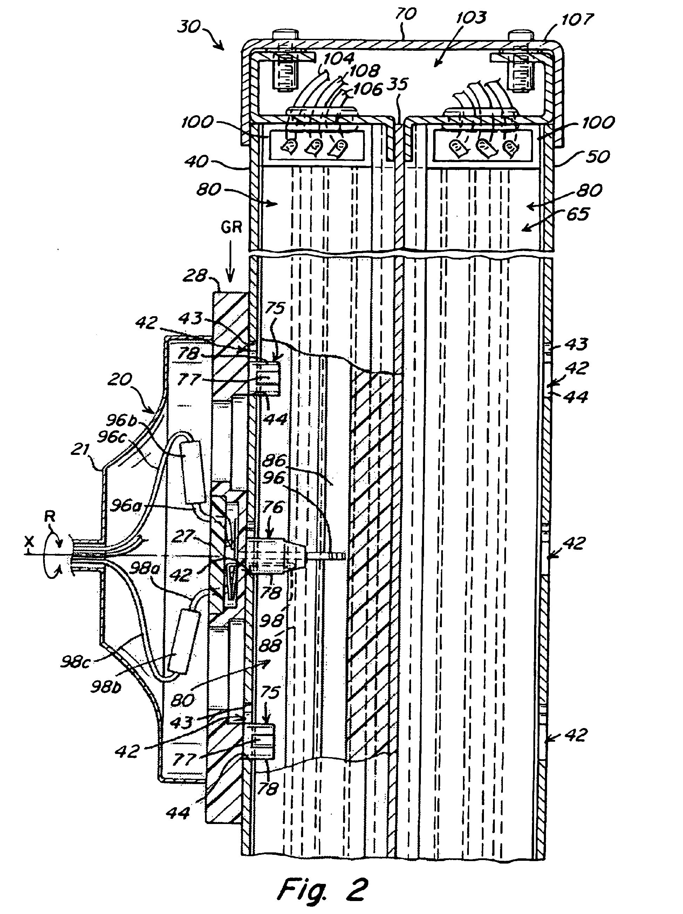

As shown in Figs. 2-5, the electrically powered device 20 comprises an light fixture 21 mounted/connected on or to a disk or support 28 member via bolts 29 or other conventional mechanical connection mechanisms such as nails, clasps, glue, snap-together mechanism or the like. The disk member 28 is typically constructed as a generic device having at least two pins, projections or keys 75, 76 (referred to generically herein as "pins") for purposes of ensuring that the disk member 28 together with its attached device 21 is mountable in a fully stable position on or to the wall 40 of the panel 30 under the force of gravity GR, and is stable against rotation R around the axis X of the disk member 21 (Fig. 2).

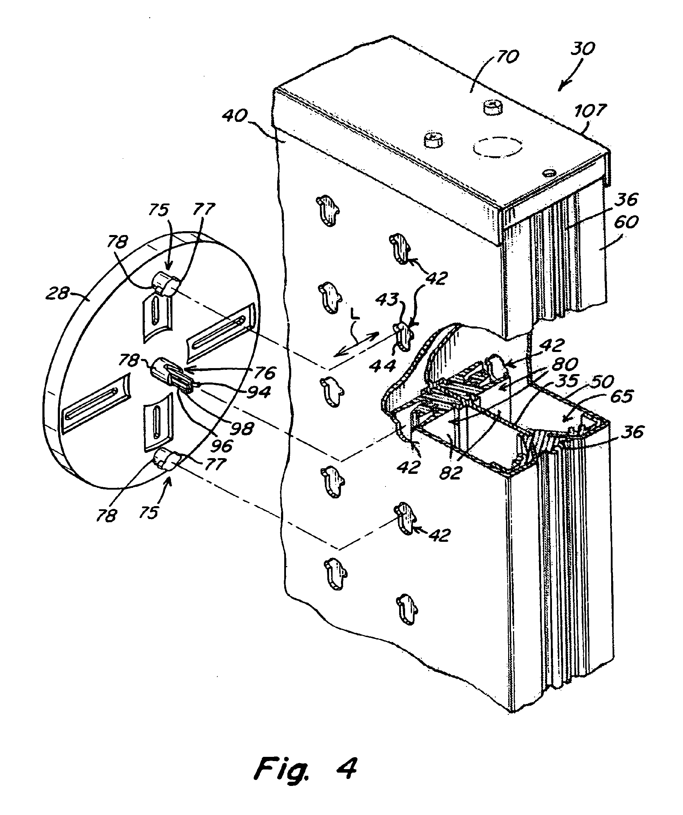

With reference to Figs. 2-5 and particularly Fig. 4, at least one of the pins 75 is formed as a key or in a keyed configuration having a stem portion 78 and a widened head portion 77. The widened head portion 77 of the pins 75 is enlarged, the receiving apertures 42 being formed into a complementary shape such that the widened head 77 is fully and readily receivable by and through the top end 43 of the aperture 42 in the lateral direction L, and is concomitantly readily removable from the top configured end 43 in the lateral direction L. Once the head 77 is fully inserted through and received by the top end 43 of the aperture 42, the stem portion 78 can be received by and slid downwardly through a complementary slot portion 44 of the aperture 42. The stem 78 is configured to have a widest diameter or cross sectional length that is smaller than the widest diameter or cross-sectional length of the head 77 such that on sliding of the stem 78 downwardly through the narrowed slot 44, the widened head portion 77 of the pin 75 is prevented from moving laterally outwardly L from the wall 40 as a result of an interference fit or interaction of the widened head 77 against/with the edges of the slot 44.

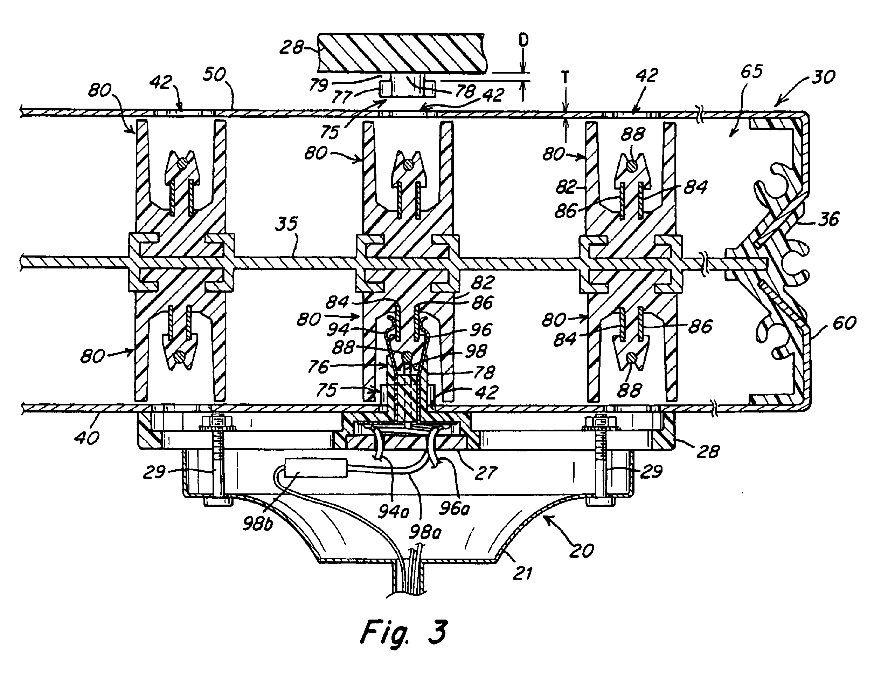

With reference to Fig. 3, the walls 40, 50 have a predetermined thickness T at least in the immediate vicinity around the edges of a mounting aperture 42. The length of the stem 78 is D. Or, stated another way, D is the axial or lateral distance of the space 79 between the axially inside facing surface of the widened head 77 and the axially outwardly facing surface of the portion of the base support 28 at the point at which the stem 78 is attached. Most preferably the thickness T and distance D are about the same, or the thickness T is slightly smaller than D by less than about .05 inches such that when the pin 75 is fully inserted within an aperture 42, the thickness of the walls 40, 50 around the edges of the aperture is securely or snugly fit within space or slot 79 by the opposing axially inwardly facing surface of the head 77 and the axially outwardly facing surface of the base support 28 to which the stem 78 is attached when the stem 78 is slid downwardly under the force of gravity GR.

As shown, Figs. 3, 4, the base 28 has a generally axially aligned central pin 76 that houses the electrical contacts of the device 21 and is received within a complementary aperture 42 as shown in Figs. 3, 4. This pin 76 is received simultaneously with receipt of pins 75 within apertures 42. As shown in the embodiments of the Figures, the axially central pin 76 comprises a stem 78 portion only and does not include a widened head 77 as pins 75 do. In an alternative embodiment, the central pin 76 could also include a widened head 77 as in the configuration of the pins 75.

In the embodiments shown in Figs 1-5, the base support member includes two spaced apart pins 75 and an axially central pin 76. If a mounting pin 75 having a widened head 78 is spaced apart from the axis X, then the second pin 76 is with or without a widened/keyed head portion, that houses the electrical contacts and the connecting wires of the electrically powered device 20.

The apertures 42 are provided and arranged in an arrangement or pattern or position on the wall 40 or 50 that is complementary to the arrangement/position of the pins 75 and/or 76 on the support member 28 whereby all of the pins 75 or 76 are simultaneously insertable through and received by a corresponding aperture 42 when the support member is manually mounted to the wall 40 or 50 as shown best in Fig. 4.

In an alternative embodiment (not shown), a pin or pins 75 could be attached to the outside surface of one or the other or both of the walls 40, 50 and the support member 28 could be configured to have complementary receiving apertures of the same or similar design/configuration as apertures 42. In such an embodiment, the pins would be arranged on the surface of the wall 40, 50 in a pattern that is complementary to the arrangement/position of the apertures on the support 28 whereby at least one pin and preferably two pins on the wall 40, 50 are simultaneously insertable through and received by a corresponding aperture provided on the support 28.

As shown in Figs. 2-5, 8-15, power delivery members 80 are mounted and arranged within the interior space 65 of the housing 30. The power delivery members 80 comprise a base support 82, 82a, Figs. 8, 8a of electrically non-conductive material such as plastic or wood. Electrically conductive positive and negative delivery contacts 84, 86 and ground contact 88 are mounted on the non-conductive supports 82, 82a, Figs. 8-13. The non-conductive supports 82, 82a are mounted on or to a housing support member 35, 35a, Figs 8, 8a, and the delivery contacts 84, 86, 88 are mounted on or to the supports 82, 82a in an arrangement selected to align the delivery contacts 84, 86, 88 with the receiving/mounting apertures 42 so that when the electrically powered device's corresponding positive and negative 94, 96 and ground 98 receiving contacts are inserted into and received by a mounting aperture 42, the receiving contacts 94-98 will be routed and come into electrically conductive contact with the delivery contacts 84-88. As shown in the embodiment of Figs. 27-30 support members 82 containing and mounting the power contacts 84-88 are mounted via housing members 35a in alignment with apertures 42.

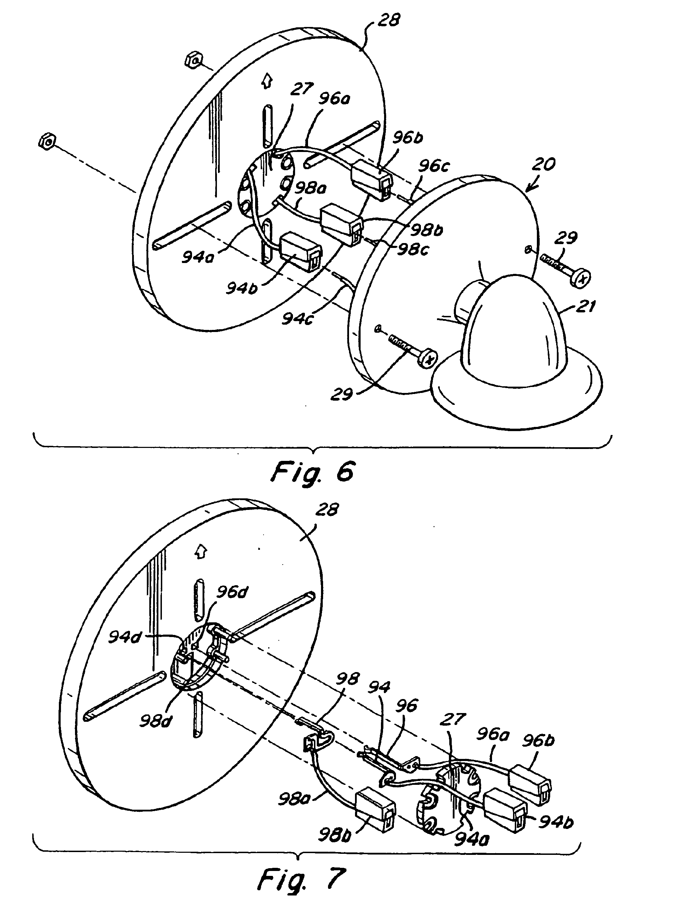

As shown in Figs. 2,3,4,6 and 7, the electrically powered device has three electrically conductive wires, feeds or connections positive, negative and ground 94c, 96c, 98c respectively that connect to connectors 94b, 96b, 98b which are in turn connected to conductive wires 94a, 96a, 98a which are in turn connected to conductive contacts 94, 96, 98 which are mechanically mounted in a stable axially projecting disposition as shown in the Figures to support member 28 with the rigid conductive projections 94, 96, 98 projecting through mounting apertures 94d, 96d, 98d provided in support member 28. A cover plate 27 is affixed over the recess in support member 28 in which the bases of the contacts are mounted to prevent hand contact and electrical shock. The cover plate has apertures for wires 94a, 96a and 98a to pass through as best seen in Fig. 6. As shown in Figs. 8-13, the contacts 94, 96, 98 are typically housed within, surrounded by and/or mounted within the axial interior of pin 76 in a stable spatial/positional arrangement that is complementary for purposes of conductive contact/engagement with the arrangement of the delivery contacts 84, 86, 88 on their support 82, 82a.

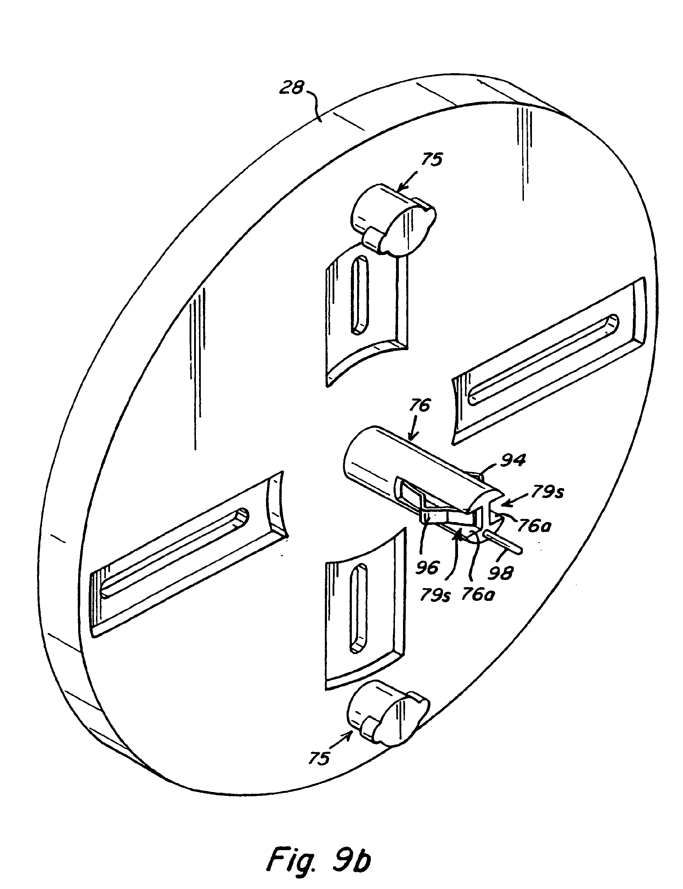

As shown in Figs. 8, 9, 8a, 9a when a support member 28 with its attached fixture 21 is initially moved into position for mounting on wall 40, the axis of the pin 76 that houses or supports the electrical receiving contacts 94, 96, 98 is initially axially aligned with the axis AX of the aperture 42 and then manually guided generally along axis AX such that the pin 76 is inserted along the axis AX into the mounting/receiving aperture 42. In this initial insertion position, Figs. 8, 8a, 9, 9a, none of the contacts 94, 96, 98 are yet in contact with any of the power delivery contacts 84, 86 and 88. On further insertion of the support pin 76 as shown in Figs. 10, 10a, 11, 11 a, the ground contact 98 of the fixture/device comes into contact with ground contact 88 of the power delivery device before the live positive and negative electrical delivery contacts, 84, 86 come into contact with the device positive and negative receiving contacts 94, 96. The contacts 94, 96, 98 are configured, mounted and arranged on the support pin 76 and the contact 84, 86, 88 are configured, mounted and arranged on the support 82 so that the ground contact 98 always and necessarily comes into contact/engage with the power delivery ground contact 88 before the positive and negative contacts engage/come into contact with each other. As shown in Figs. 12, 12a, 13, 13a, when the mounting pin 76 is fully inserted into the aperture 42, the positive 84/94 and negative 86/96 contacts come into contact/engage with each other with the ground contacts 88/98 already being and remaining in contact with each other.

In and during the course of movement of the support member 28 from the position shown in Figs. 10, 11, to the position shown in Figs. 12, 13, the device contacts 94, 96 are forced inwardly under a radially inwardly directed spring force IF into spring loaded engagement contact with their corresponding positive and negative 84, 86 live delivery contacts. And, the ground contact 98 is maintained as shown under a spring load axial force AF with its corresponding ground contact 88.

Also, in and during the course of movement of the support member 28 from the position shown in the alternate embodiment of Figs. 10a, 11a, to the position shown in Figs. 12a, 13a, the device contacts 94, 96 are adapted to be spring loaded to exert a radially outwardly directed spring force OF engagement with their corresponding positive and negative 84, 86 live delivery contacts. And, the ground contact 98 is maintained as shown under a spring loaded axial force with its corresponding ground contact 88.

In the embodiment shown in Figs. 8a, 9a, 9b, 10a, 11 a, 12a, 13a, the device contacts 94, 96 are adapted to spring radially outwardly OF. The device contacts 94, 96 are typically formed of relatively thin strips of highly conductive metal material and are relatively fragile. Given their relative fragility and their mechanical engagement under a radially outwardly directed spring force OF with the edges 42b of the apertures 42 and with the interior surfaces 82b of the support members 82a, the device contacts 94, 96 are mounted to the pin protrusion 76 and arranged so as to be embedded or housed within a slot 79s formed by flanged walls 76a of pin 76. The flanged walls 76a house the contacts 94, 96 and thus mechanically protect the majority of the length of the contacts 94, 96 from significant incidental contact or axial movement that could result from physical engagement with external objects or structures that might damage their arrangement or structure such as the edges 42b of the apertures 42 or the interior wall surfaces 82b into and through which the pins 76 are inserted. As shown, the contacts 94, 96 are mounted to/on the pin 76 and are configured relative to the power delivery support 82a and interior wall surface 82b so that the contacts are forced radially inwardly toward each other on contact with the surfaces 82b and exert a constant concomitant radially outward spring force OF on the interior surfaces 82b and ultimately on the power delivery contacts 84, 86.

Simultaneously in and during the course of movement of the support 28 from the position shown in Figs. 10, 10a, 11, 11 a to the position shown in Figs. 12, 12a, 13, 13a, the keyed pins 75 having the enlarged heads 77 are simultaneously inserted into corresponding mounting apertures 42, with the heads 77 first being inserted through the enlarged aperture portions 43 and then subsequently the stems 78 being slid vertically downwardly through the narrowed slot portion 44 of the apertures 42. As noted, the pin 76 that mounts the contacts 94, 96, 98 could be configured with a head 77 and stem 78 and mounted to apertures 42 in the same manner as pins 75 are mounted to apertures 42.

On complete, full or final insertion of the pins 75, 76 into their corresponding apertures 42, the support 28 and its attached fixture 21 is fully mounted in a stable position on the wall 40 against rotation X and against falling downwardly under the force of gravity GR. Concurrently, the device/fixture 21 is fully electrically connected/engaged to the live electrical contacts 84, 86 which are in turn connected to an original source of electrical power that powers the electrically powered device 20. Thus an electrical power connection is made concurrently or simultaneously in/during the course of a single manual motion that mounts the electrically powered device 20 on the wall 40.

The physical size and shape of the apertures 42 is preferably selected to obstruct or prevent a human finger from being capable of penetrating through the apertures 42 such that finger/manual contact with the live delivery contacts 84, 86 cannot be made.

Another alternative embodiment is shown in Figs. 21-26 where the ground contact 98 of the electrically powered device 20 is configured as an elongated member that engages the corresponding ground contact 88 of the power delivery member 80 under a spring force AF exerted as a result of a bending of the member prior to the positive 94 and negative 96 device contacts engaging their corresponding power delivery contacts 84, 86 under a radially inwardly directed spring force IF as shown. Mounting and movement of the Figs. 21-26 assembly is the same as described above with reference to Figs. 8-13.

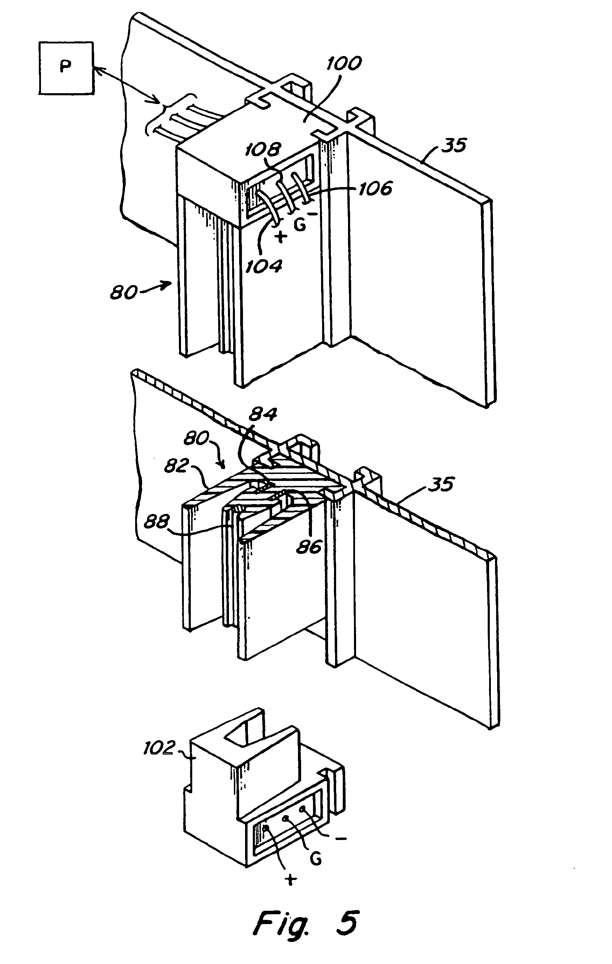

As shown in Figs. 5, 29-32 the delivery contacts 84, 86, 88 are electrically interconnected to an original source of electrical power P, via positive, negative and ground 104, 106, 108 connecting wires that interconnect in series successively to electrical circuit splitters 100. The electrical circuit splitters 100 are typically fittingly mounted at the top terminal end of a power delivery support 82 and contain a circuit splitter device that conductively connects the wires 104, 106, 108 into conductive engagement with corresponding positive, negative and ground contacts 84, 86, 88 of each power delivery member 80 that is mounted within the housing 30. As shown, Fig. 16, successive splitters are interconnected in series by conductive wires 104, 106, 108 which at their terminal end are mounted in a plug 109 that interconnects to the original source of power P. The original source of power P supplies electrical power to all of the power delivery members 80 interconnected to each other within a single housing 30 or between separate housings where the separate housings are electrically interconnected to each other, the power being split and distributed to each power delivery member 80 via the series interconnected splitters 100. Electrical circuit splitters 102 are typically fittingly mounted at the bottom terminal end of the power delivery supports to insulate the delivery contacts 84, 86, 88 from enclosure 107a. They may or may not be connected to wires such as 104, 106,108 to connect to further circuits such as seen in Fig. 16.

As shown in Fig. 1, separate housings 12, 14, comprised of the same power delivery supports 80 and electrical connections as housing 30, can be mounted on or to housing 30 via the same pins 75, 76 and contacts 84/94, 86/96, 88/98 interconnections and engagements as described above regarding mounting of the electrically powered devices and support members 20,28 in order to provide electrical power to all of the power delivery members that are mounted within the additional separate housings 12, 14. In addition the housings 12, 14 are mountable in a stable position on the surface of wall 40 or 50 of the main housing 30 as shown in Fig. 1. As shown, once the separate housings/panels 12, 14 are fully mounted, they are independently capable of mounting and providing electrical power to electrically powered devices 24, 26 that are mounted on their walls in the same manner as described above with reference to the mounting of devices 20 on wall 40. In such an embodiment, a set of pins 75 and/or 76 are attached and arranged on or to a side wall 13, 15 of the panels 12, 14 such that the generally planar mounting walls 17, 19 of the panels 12, 14 can be mounted at a generally right angle (i.e. 90 degrees), to the generally planar wall 40 of the main panel. As shown, the mounting walls 17, 19 of the separate housings 12, 14 have an arrangement of mounting apertures 42 having the same design configuration as apertures 42 described above regarding housing 30. Thus, in such an embodiment, multiple wall surfaces 17, 19, 40 are provided in a single interconnected apparatus that is powered by a single source of power P for mounting and powering multiple devices 20, 22, 24 and 26.

In the embodiments shown in Figs. 1-9, 10-11, 12-13, the apparatus comprises a housing structure that is comprised of a pair of opposing walls 40, 50 each having mounting apertures 42 disposed therein and each having a corresponding series of power delivery members 80 aligned with the apertures 42. As shown, Fig. 3, the housing 30 is formed by the mounting of the end walls 40, 50 to a side connector 36 which is in turn mounted to a center support 35 which in turn mounts the power delivery members 80 in an arrangement aligned with the apertures 42. In the embodiment shown, the power delivery members are elongated members mounted in a generally top-to-bottom arrangement that is complementary to the top-to-bottom arrangement of the apertures 42. In this Figs. 1-9 housing 30 embodiment, the apparatus is modular, enabling installation and removal of a pre-selected number of power delivery members 80 by sliding insertion-mounting and removal of a support 82 onto or from the center housing support 35. Such a housing design further readily enables a single housing 30 to have two opposing spaced walls 40, 50 forming a single housing that are both capable of mounting and powering electrically powered devices on opposing sides of the housing 30.

In the embodiment shown in Figs. 27-30, 8a, 9a, 10a, 11 a, 12a, 13a, the housing 30 comprises a generally planar wall 40 having top 47 and bottom 49 ends and side walls 60 that are preferably unitary with the wall 40, typically formed from a single sheet of sheet metal. As shown, the side walls 60 comprise and are formed as a flange or flanged sidewall 41 structure that is either unitary with the generally planar mounting wall 40, Figs. 27-30, or alternatively comprises a separate structure (not shown) that is rigidly attached to the front wall 40 by welding or bolting or the like. In a preferred embodiment, the housing 30 includes reinforcing struts or beams 35a that are attached to the rear surface and extend substantially the entire width W of the wall 40, Fig. 29. Such struts or beams 35a typically comprise a structurally rigid material such as wood, solid plastic or a metal material and are typically firmly attached to the rear of the wall at multiple points 43 along or across the width W of the rear side of the wall 40. Such struts or beams 35a are configured as elongated beams or rods and are arranged such that a surface of the rigid strut or beam 35a engages against the rear surface of the wall 40 along or across substantially the entire width W of the wall.

As shown the power delivery members 80 typically comprise a substantially straight elongated beam of non-conductive material 82 that extends substantially the entire vertical height H, Fig. 29, of the wall 40 from its top 47 to bottom 49 ends, the top ends of the beams or supports 82 being adapted to receive a circuit splitter 100 that connects the power P to the power delivery contacts 84, 86, 88 mounted on the supports 82. The reinforcement struts 35a are disposed at typically two or more locations along the vertical height H of the wall 40. Most preferably the beam or strut is a structurally rigid elongated beam 35a that can be formed as a hollow rectangular tube or tubular structure having a depth DE that extends through substantially the entire depth DE, Fig. 30, of the housing 30 from front to back. Alternatively the strut 35a can be configured as a solid beam typically comprised of a metal material that can be readily welded or attached to the wall 40 which itself is typically comprised of a metal material. Attachment to the rear surface of the wall 40 of two or more struts 35a at different positions along/across the height H of the wall 40 and attachment at multiple points 43 along/across the generally horizontal width W of the wall 40 imparts a rigidity to the mounting wall 40 across the horizontal width W that acts against the vertically downward force/weight of the electrically powered devices and to the housing 30 generally that enables high weight loads to be mounted on the front surface of the mounting wall 40, typically in excess of about 5 pounds, preferably in excess of about 10 pounds and most preferably in excess of about 15 pounds.

The wall 40 is typically formed of sheet metal (steel) having a thickness T, Figs. 3, 29 of between about .04 and about .08 inches. The panel 10 preferably includes a minimum number of struts or beams 35a positioned from top 47 to bottom along the height H of the wall 40 as will accommodate or fit along or within height H such that the maximum distance DA between the closest attachment points 43 between successive or adjacent struts 35a is about 16 inches and preferably about 18 inches, i.e. the maximum distance DA between adjacent strut attachment points 43 can vary between 0 and 16 inches where the wall thickness T is between about .04 and .08. The greater the thickness T of the wall, the greater the maximum distance DA can be.

In the embodiments shown in Figs. 27-30, the struts or beams 35a preferably include recesses or apertures or other means 120 for receiving and mounting the power delivery members 80 and their supports 82 in an arrangement complementary to and in axial alignment with the arrangement, location and mounting axes AX of the wall apertures 42, Fig. 30. Further in a preferred embodiment, Figs. 29-30, the electrical wiring 104, 106, 108 and distribution and splitter components 100 of the system are enclosed within a predefined space 103 at the top end of the wall 40 by an enclosure 107 that is attached to the wall 40 and an adjacent strut 35a in a manner so as to obstruct manual access to the wires and splitters. Such an enclosure 107 is preferably readily attachable to and detachable from the housing 30, wall 40 or other components surrounding and around the space 103.

As shown in Figs. 14-18 a panel 30 can be mounted by suspension from an overhead support 150 in a generally vertical disposition. Most preferably the mechanism by which the panel 30 is connected to the support is via quick couple and quick release mechanism such as a spring-loaded clip 152 that can be readily manually engaged/inserted into or with a complementary receiving aperture or slot provided in/on a channel member 153 connected to the overhead support 150. In the embodiment shown, the spring-loaded clip 152 is attached to and extends from the top end 47 of the panel 30 via bolts 156,157, nuts 156a, 157a and interconnecting bar 158. The overhead support 150 is connected by conventional means to a structural support on the ceiling of a room (not shown) or a wall or other like structure. Alternatively, the quick release mechanism such as spring loaded clip 152 can be connected to the overhead support 150 and the complementary receiving slot or aperture provided in a strut or channel that is connected to the top end of the housing 30. As shown, the top end 47 of the housing 30 is provided with the enclosed channel or space 103, enclosed by enclosure 107 through which live wires 104, 106 and ground wire 108 are routed along the width W of the housing via the splitters 100 mounted at the top ends of the support members 82 of the power delivery members 80. The wires routed through the space 103 can be continued in their routing out of the enclosed space 103 through a shielded cable or tube 109a that typically terminates in an electrical connection plug 109 that inputs power from a source P as seen in Figs. 14 and 18. Alternatively as seen in Figs. 16 and 17 the live wires 104, 106 and ground wire 108 can routed through the enclosed space 103 and connected to power source P via modular connector 111 and connector 115 to cable 109a and plug 109 at one end and can be terminated at connector 111a at the other end. Connector 111a can be accessed by a modular connector such as 113, 113a or a connector such as 115a or 115b such that electrical power from the same source P that is input to and powers the power delivery members 80 can be further conveniently and safely routed or connected via the outlet 111 a to or from another device/apparatus that requires electrical power.

As shown in Fig. 16 two separate panels 30, 30a are mounted adjacent to each other from an overhead support 150 and are electrically interconnected to each other via modular connector 113 that interconnects modular outlet connectors 111 a, 111 b such that the single source of power P that is input to panel 30 by way of power plug 109, cable 109a and modular connector 115 is routed via connectors 111a, 111b, 113 to provide power to panel 30a. And the same electrical power is routed through channel 103b in enclosure 107b to another connector 111c which in turn can be interconnected to modular connector 113a which can be interconnected to a further panel or panels 30. Alternatively the connector 111 a may be interconnected to a connector 115a or 115b to connect to another electrically powered device and thus deliver electrical power from the same original source P. As can be readily imagined, the separate panels 30, 30a can alternatively be mounted in any manner on a ground surface, on a wall or the like and the serial connections as described can still be made between the panels 30, 30a.

Further as shown in Fig. 16, a panel according to the invention can include electrical circuit power splitting mechanisms that split electrical power from the wires 104, 106, 108 in the top channels 103, 103b and route the split power through a bundle of corresponding wires 160, 162 through the interior spaces 65, 65a of the housings 30, 30a to any other desired portion of the housings 30, 30a such as to channels 103a, 103c along the bottom of the panels. Such bottom channels/spaces 103a, 103c are preferably enclosed by an enclosure 107a, 107c respectively to prevent manual access to the live wire bundles 164, 166 resident in spaces 103a, 103c that are split from the downwardly routed wire bundles 160, 162. As shown, the wire bundles 164, 166 are interconnected to connector outlets 109c, 109e (depicted for purposes of example only as multi-modular electrical outlets) via cables 109b, 109d that are interconnected to modular connectors 115a, 115b which are in turn connected to modular connectors 111 d, 111 g. As shown the split wire bundles 160, 162 routed to the bottom of the panels 30, 30a are also split again to connect to modular connectors 111d, 111 e, 111 f and 111 g which are available to the user of the system to connect another electrically powered device to in a convenient location. By virtue of the splitting of the wires 104, 106, 108 and bundles 160, 162, 164, 166 to all of the various connectors/outlets, the entire system is supplied with electrical power by the single source P which is connected to the system via the one modular connector 111. Alternatively the circuit splitters 102 at the bottom of the power delivery members 80 may be wired to the modular connectors 111 d-111 g instead of using wire bundles 162-166. In the Figs. 16-18 embodiment, the top surface of the enclosure 107 also serves as the top wall 70 of the housings 30, 30a.

In typical embodiments of the invention, the geometry of the front and back faces of the panels 30, 30a are such that the bottom ends 49 are straight and the sides of the panels are generally straight and perpendicular to the bottom edge 49 such that the edges can be readily mechanically attached to each other at an angle by a mechanism such as a hinge. As shown in Figs. 19 and 20 two or more panels 30 can are mechanically connected at their side edges 200 such that their wall surfaces 40 are disposed at either an acute, right or obtuse angle Z to each other. The structural rigidity of the individual housings 30 together with their angled connection 220 at an angle Z of typically between about 10 and about 170 degrees, preferably between about 20 and about 160 degrees, more preferably between about 25 and about 155 degrees, enables the connected panels 30 to be mounted on their bottom ends 49 on a ground surface GS in a stable, self-supporting vertically upright disposition without the necessity of the use of other mounting means to maintain the assemblies in the vertically upright positions shown although other mechanisms such as pads, feet, props or the like may be additionally attached to the bottom or front or back sides of the panels to engage the ground surface and further stabilize the generally vertically upright positioning of the assemblies 250, 260. In such assemblies, the bottom ends 49 of the panels 30 connected at selected angle Z cooperate with each other in their angled arrangement to provide opposing forces in opposite directions that balance the position of the assemblies 250, 260 against inertia or other forces such as gravity that would otherwise cause the assemblies 250, 260 to move or fall over from their vertically upright dispositions as shown. As can be readily imagined the variety of angles Z and the number and variety of assembled panels is widely variable.

## Claims

1. An electrical power distribution and mounting system, the system comprising:
a housing comprising a mounting wall (40) having a front side, a rear side and a plurality of apertures (42) arranged in a select pattern;
a power delivery member (80) mounted on the rear side of the mounting wall, the power delivery member including power delivery contacts and a ground contact aligned with the plurality of apertures (42) in the mounting wall and arranged on the power delivery member in a select arrangement;
one or more electrically powered devices (24) including complementary mating contacts (94,96,98) projecting from the electrically powered device in an arrangement that is complementary to the select arrangement of the power delivery (84,86) and ground contacts (88) of the power delivery member;
each electrically powered device being mountable in a stable position on the front side of the mounting wall such that the mating contacts (94,96,98) projecting from the electrically powered device (24) extend through one of the apertures (42) in the mounting wall (40) and engage with a corresponding power delivery contact (84,86) and ground contact (88) of the power delivery member when the electrically powered device is fully mounted in the stable position; and,
wherein one of the electrically powered device and the mounting wall have a primary pin (75 or 76);
the other of the electrically powered device and the mounting wall having a primary aperture (42) that is adapted to receive and retain the primary pin against lateral or axial movement out of the primary aperture; and
one of the electrically powered device (24) and the mounting wall (40) have a second pin (75 or 76);
the other of the electrically powered device and the mounting wall having a second aperture (42) that receives the second pin simultaneously on receipt of the primary pin by the primary aperture; and,
the primary and second pins and the primary and second apertures being arranged such that the complementary mating contacts and the power delivery and ground contacts are guided into engagement with each other upon receipt of the primary and second pins within their corresponding primary and second apertures.

2. The system of claim 1 wherein the power delivery members (80) are mounted on the rear side of the mounting wall (40) and the power delivery contacts and the ground contact are all arranged such that manual engagement with the power delivery contacts through an aperture (42) from a position from the front side of the mounting wall (40) is prevented.

3. The system of claim 1 wherein the primary pin (75 or 76) comprises a shaft (78) and a head (77) connected to the end of the shaft, the shaft and the head having selected configurations, the primary aperture (42) having a first portion complementary to the head configuration for receiving the head and a second portion complementary to the shaft configuration for receiving the shaft; and,
the head of the primary pin forming an interference fit against the second portion of the primary aperture to mount the support member of the electrically powered device on the wall.

4. The system of claim 1 wherein:
the electrically powered device comprises an electrically powered fixture mounted to a support member;
the primary pin (75 or 76) being rigidly connected to the support member and the primary aperture (42) is formed in the wall of the housing; and,
the primary aperture (42), the pin (75 or 76) and the power delivery member (80) being arranged relative to each other so that the complementary mating contacts are routed into engagement with the power delivery and ground contacts upon receipt of the primary pin within the primary aperture.

5. The system of claim 1 wherein the primary pin (75 or 76) is rigidly connected to the electrically powered device and the primary aperture is formed within the mounting wall, the primary pin housing the complementary mating contacts of the electrically powered device, the complementary mating contacts being received through the primary aperture together with receipt of the primary pin through the primary aperture.

6. The system of claim 1 wherein the pins are attached to the electrically powered device and the apertures are disposed in the wall of the housing.

7. The system of claim 1 wherein the plurality of apertures (42) disposed within the mounting wall (40) are arranged such that the primary and second pins (75 or 76) of the electrically powered device are receivable within a plurality of different pairs of the plurality of apertures, additional power delivery members being mounted on the rear side of the mounting wall in an arrangement to enable engagement of the mating contacts with power delivery contacts via each one of the plurality of apertures.

8. The system of claim 1 wherein the electrically powered device has a third pin, the complementary mating contacts being housed within the third pin, the third pin being receivable through a complementary aperture formed in the wall of the housing, the primary, second and complementary apertures being arranged on the wall and the primary, second and third pins being arranged on the support member such that the pins are all receivable within the apertures to route or guide the complementary mating contacts into engagement with the power delivery contacts upon receipt of the pins within the apertures.

9. The system of claim 8 wherein the mounting wall (40) has a plurality of apertures (42) disposed within the wall in an arrangement such that the primary and second and complementary pins of the electrically powered device are receivable within a plurality of different sets of three of the plurality of apertures.

10. The system of claim 8 wherein at least two of the pins and the respective apertures in which the at least two pins are received are adapted to receive and retain the at least two pins against lateral or axial movement out of the respective apertures.

11. The system of claim 1 wherein the system includes at least two power delivery members (80) arranged on the rear side of the mounting wall (40) such that at least two electrically powered devices are independently mountable in a stable position on the front side of the mounting where the complementary mating contacts of the two electrically powered devices are all engaged with a corresponding power delivery and ground contact of the two respective power delivery members when each of the at least two electrically powered devices are fully mounted in the stable position on the front side of the mounting wall.

12. The system of claim 11 wherein each of the power delivery contacts of each of the power delivery members is connected to a common source of electrical power.

13. The system of claim 1 wherein the complementary mating contacts of the electrically powered device include a spring mechanism that maintains the mating contacts in engagement with the power delivery and ground contact.

14. The system of claim 1 wherein the mounting wall comprises a thin sheet of rigid material having a height and a width and one or more struts disposed at one more vertically spaced positions along the height, the struts being attached to multiple positions extending across the width of the sheet.

15. The system of claim 1 wherein the select arrangement of the power delivery contacts and the ground contact of the electrical power delivery member is selected such that the ground contact of the power delivery member engages with a complementary mating contact of the electrically powered device before the power delivery contacts of the power delivery member engage with a complementary mating contact of the electrically powered device during the course of the electrically powered device being mounted on the front side of the mounting wall.

16. The system of claim 1 wherein the housing includes electrical wiring mounted in, on or to the housing such that the mounting wall, the power delivery members and the electrical wiring form an interconnected housed system, the electrical wiring interconnecting each of the power delivery members to a common source of power.

17. The system of claim 1 wherein a plurality of electrically powered devices are mountable on the mounting wall, each of the plurality of electrically powered devices having a primary and a second pin that are receivable within a plurality of different sets of complementary apertures in the mounting wall.

18. A method of mounting an electrically powered device (24) having power receiving contacts (94,96) for mounting and powering of the device on a display housing having a mounting wall (40) having a front surface and a rear surface, the method comprising:
attaching a primary pin (75 or 76) to the electrically powered device (24) in a select position relative to the complementary mating contacts;
mounting one or more power delivery members (80) having power delivery contacts on the rear surface of the mounting wall in a select arrangement;
forming a series of apertures in the mounting wall that are adapted to receive and retain the pin of the electrically powered device upon receipt;
arranging the formed apertures(42) on the mounting wall of the housing in an arrangement that is complementary to the select arrangement of the power delivery members (80) mounted on the rear surface such that the mating contacts of the electrically powered device are guided or routed into engagement with the power delivery contacts upon receipt of the pin through a primary aperture formed in the wall; and, wherein one of the electrically powered device (24) and the mounting wall (40) have a second pin (75 or 76);
the other of the electrically powered device and the mounting wall having a second aperture (42) that receives the second pin simultaneously on receipt of the primary pin by the primary aperture; and,
the primary and second pins and the primary and second apertures being arranged such that the complementary mating contacts and the power delivery and ground contacts are guided into engagement with each other upon receipt of the primary and second pins within their corresponding primary and second apertures.

19. The method of claim 18 further comprising:
providing the power delivery member with a ground contact; and,
guiding a mating contact of the electrically powered device into engagement with the ground contact of the power delivery member prior to guiding the other mating contacts into engagement with the power delivery contacts during the inserting.

20. The method of claim 18 further comprising forming the primary aperture (42) into a configuration that prevents lateral or axial movement of the pin out of the primary aperture on receipt of the pin within the primary aperture.

## Patentansprüche

1. Elektrische Stromverteil- und Befestigungssystem, wobei das System umfasst:
ein Gehäuse, das eine Befestigungswand (40) mit einer Vorderseite, einer Rückseite und mehreren Öffnungen (42), die in einem ausgewählten Muster angeordnet sind, umfasst,
ein Strom-Verteilelement (80), das an der Rückseite der Befestigungswand befestigt ist, wobei das Strom-Verteilelement Strom-Verteilkontakte und einen Erdungskontakt umfasst in Ausrichtung mit den mehreren Öffnungen (42) in der Befestigungswand und an dem Strom-Verteilelement in einer ausgewählten Anordnung angeordnet;
eine oder mehrere elektrisch betriebene Vorrichtungen (24), die komplementär zusammenpassende Kontakte (94, 96, 98) umfasst, die von der elektrisch betriebenen Vorrichtung in einer Anordnung hervorstehen, die komplementär zu der ausgewählten Anordnung der Strom-Verteil- (84, 86) und Erdungs-Kontakten (88) des Strom-Verteil-Elementes angeordnet ist;
wobei jede elektrisch betriebene Vorrichtung in einer stabilen Position an der Vorderseite der Befestigungswand befestigbar ist, so dass die zusammenpassenden Kontakte (94, 96, 98), die von der elektrisch betriebenen Vorrichtung (24) hervorstehen, sich durch eine der Öffnungen (42) in der Befestigungswand (40) erstrecken und mit einem korrespondierenden Strom-Verteilkontakt (84, 86) und einem Erdungs-Kontakt (88) des Strom-Verteilelementes in Eingriff gehen, wenn die elektrisch betriebene Vorrichtung vollständig in der stabilen Position befestigt ist; und
wobei eine der elektrisch betriebenen Vorrichtung und der Befestigungswand einen ersten Stift (75 oder 76) umfasst;
wobei die andere der elektrisch betriebenen Vorrichtung und der Befestigungswand eine erste Öffnung (42) umfasst, die dazu ausgelegt ist, den ersten Stift gegen eine seitliche oder axiale Bewegung aus der ersten Öffnung heraus aufzunehmen und zurückhalten; und
wobei eine der elektrisch betriebenen Vorrichtung (24) und der Befestigungswand (40) einen zweiten Stift (75 oder 76) umfasst;
wobei die andere der elektrisch betriebenen Vorrichtungen und der Befestigungswand eine zweite Öffnung (42) umfassen, die den zweiten Stift simultan bei Aufnahme des ersten Stiftes über die erste Öffnung aufnimmt; und
wobei die ersten und zweiten Stifte und die ersten und zweiten Öffnungen derart angeordnet sind, dass die komplementär zusammenpassenden Kontakte und die Strom-Verteil- und Erdungs-Kontakte in einen Eingriff miteinander geführt werden bei Aufnahme der ersten und zweiten Stifte innerhalb deren korrespondierenden ersten und zweiten Öffnungen.

2. System gemäß Anspruch 1, bei dem die Strom-Verteilelemente (80) an der Rückseite der Befestigungswand (40) befestigt sind und die Strom-Verteilkontakte und die Erdungs-Kontakte alle derart angeordnet sind, dass ein manueller Eingriff mit den Strom-Verteilkontakten durch eine Öffnung (42) von einer Position von der Vorderseite der Befestigungswand (40) verhindert ist.

3. System gemäß Anspruch 1, bei dem der erste Stift (75 oder 76) eine Achse (78) und einen Kopf (77) umfasst, der mit dem Ende der Achse verbunden ist, wobei die Achse und der Kopf ausgewählte Konfigurationen aufweisen, wobei die erste Öffnung (42) einen ersten Bereich komplementär zu der Kopf-Konfiguration zur Aufnahme des Kopfes und einen zweiten Bereich komplementär zu der Achs-Konfiguration zur Aufnahme der Achse umfasst; und
wobei der Kopf des ersten Stiftes eine Übermaß-Passung gegen den zweiten Bereich der ersten Öffnung bildet, um das Befestigungs-Element der elektrisch betriebenen Vorrichtung an der Wand zu befestigen.

4. System gemäß Anspruch 1, bei dem:
die elektrisch betriebene Vorrichtung eine elektrisch betriebene Halterung umfasst, die an einem Befestigungs-Element befestigt ist;
wobei der erste Stift (75 oder 76) starr mit dem Befestigungs-Element verbunden ist und die erste Öffnung (42) in der Wand des Gehäuses gebildet ist; und
wobei die erste Öffnung (42), der Stift (75 oder 76) und das Strom-Verteilelement (80) relativ zueinander derart angeordnet sind, dass die komplementär zusammenpassenden Kontakte in Eingriff mit den Strom-Verteil- und Erdungs-Kontakten bei Aufnahme des ersten Stiftes innerhalb der ersten Öffnung geleitet werden.

5. System gemäß Anspruch 1, bei dem der erste Stift (75 oder 76) starr mit der elektrisch betriebenen Vorrichtung verbunden ist und die erste Öffnung innerhalb der Befestigungswand gebildet ist, wobei der erste Stift die komplementär zusammenpassenden Kontakte der elektrisch betriebenen Vorrichtung unterbringt, wobei die komplementär zusammenpassenden Kontakte durch die zweite Öffnung zusammen mit Aufnahme des ersten Stiftes durch die erste Öffnung aufgenommen werden.

6. System gemäß Anspruch 1, bei dem die Stifte an der elektrisch betriebenen Vorrichtung befestigt sind und die Öffnungen in der Wand des Gehäuses angeordnet sind.

7. System gemäß Anspruch 1, bei dem die mehreren Öffnungen (42), die innerhalb der Befestigungswand (40) angeordnet sind, derart angeordnet sind, dass die ersten und zweiten Stifte (75 oder 76) der elektrisch betriebenen Vorrichtung innerhalb mehrerer verschiedener Paare von den mehreren Öffnungen aufnehmbar sind, wobei zusätzliche Verteilelemente für elektrischen Strom an der Rückseite der Befestigungswand in einer Anordnung befestigt sind, um einen Eingriff der zusammenpassenden Kontakte mit Strom-Verteilkontakten über jede der mehreren Öffnungen zu ermöglichen.

8. System gemäß Anspruch 1, bei dem die elektrisch betriebene Vorrichtung einen dritten Stift umfasst, wobei die komplementär zusammenpassenden Kontakte innerhalb des dritten Stiftes untergebracht sind, wobei der dritte Stift durch eine komplementäre Öffnung, die in der Wand des Gehäuses gebildet ist, aufnehmbar ist, wobei die erste, zweite und komplementäre Öffnungen an der Wand angeordnet sind und die ersten, zweiten und dritten Stifte an dem Befestigungs-Element angeordnet sind, so dass die Stifte alle innerhalb der Öffnungen aufnehmbar sind, um die komplementär zusammenpassenden Kontakte in Eingriff mit den Strom-Verteilkontakten bei Aufnahme der Stifte innerhalb der Öffnungen zu führen oder zu leiten.

9. System gemäß Anspruch 8, bei dem die Befestigungswand (40) mehrere Öffnungen (42) umfasst, die innerhalb der Wand in einer Anordnung derart angeordnet sind, dass die ersten und zweiten und komplementären Stifte von der elektrisch betriebenen Vorrichtung mit mehreren von verschiedenen Sets von drei der mehreren Öffnungen aufnehmbar sind.

10. System gemäß Anspruch 8, bei dem wenigstens zwei der Stifte und der jeweiligen Öffnungen, in der die wenigstens zwei Stifte aufgenommen sind, ausgelegt sind, um die wenigstens zwei Stifte gegen seitliche oder axiale Bewegungen aus der jeweiligen Öffnung heraus aufzunehmen und zurückzuhalten.

11. System gemäß Anspruch 1, bei dem das System wenigstens zwei elektrische Verteil-Elemente (80) umfasst, die an der Rückseite der Befestigungswand (40) angeordnet sind, so dass wenigstens zwei elektrisch betriebene Vorrichtungen unabhängig in einer stabilen Position an der Vorderseite der Befestigung befestigbar sind, wo die komplementär zusammenpassenden Kontakte von den zwei elektrisch betriebenen Vorrichtungen alle mit einem korrespondierenden Strom-Verteil- und Erdungs-Kontakt von den zwei jeweiligen Stromverteil-Elementen in Eingriff gehen, wenn jede von den wenigstens zwei elektrisch betriebenen Vorrichtungen vollständig in der stabilen Position an der Vorderseite der Befestigungswand befestigt sind.

12. System gemäß Anspruch 11, bei dem jeder der Stromverteil-Kontakte von jedem der Stromverteil-Elemente mit einer gemeinsamen Quelle von elektrischem Strom verbunden ist.

13. System gemäß Anspruch 1, bei dem die komplementär zusammenpassenden Kontakte von der elektrisch betriebenen Vorrichtung einen Federmechanismus umfassen, der die zusammenpassenden Kontakte in Eingriff mit den Strom-Verteil- und Erdungs-Kontakten hält.

14. System gemäß Anspruch 1, bei dem die Befestigungswand einen dünnen Bogen aus einem steifen Material umfasst, der eine Höhe und eine Breite aufweist und eine oder mehrere Abstützungen, die an einer von mehr vertikal beabstandeten Positionen entlang der Höhe angeordnet sind, wobei die Abstützungen an mehreren Positionen befestigt sind, die sich über die Breite des Bogens erstrecken.

15. System gemäß Anspruch 1, bei dem die ausgewählte Anordnung der Stromverteil-Kontakte und der Erdungs-Kontakte des elektrischen Strom-Verteil-Elementes derart ausgewählt ist, dass der Erdungskontakt des Strom-Verteil-Elementes mit einem komplementär zusammenpassenden Kontakt der elektrisch betriebenen Vorrichtung in Eingriff geht, bevor die Strom-Verteil-Kontakte des Strom-Verteil-Elements mit einem komplementär zusammenpassenden Kontakt der elektrisch betriebenen Vorrichtung während des Eingreifens der elektrisch betriebenen Vorrichtung eingreifen, die an der Vorderseite der Befestigungswand befestigt ist.

16. System gemäß Anspruch 1, bei dem das Gehäuse eine elektrische Verkabelung umfasst, die in, an oder mit dem Gehäuse befestigt ist, so dass die Befestigungswand, die Strom-Verteilelemente und die elektrische Verkabelung ein verbundenes in einem Gehäuses gelagertes System bilden, wobei die elektrische Verkabelung jedes der Strom-Verteil-Elemente mit einer gemeinsamen Stromquelle verbindet.

17. System gemäß Anspruch 1, bei dem mehrere elektrische betriebene Vorrichtungen an der Befestigungswand befestigbar sind, wobei jede der mehreren elektrisch betriebenen Vorrichtungen einen ersten und einen zweiten Stift umfassen, die innerhalb mehrerer verschiedener Sets von komplementären Öffnungen in der Befestigungswand aufnehmbar sind.

18. Verfahren zum Befestigen einer elektrisch betriebenen Vorrichtung (24), die stromempfangende Kontakte (94, 96) umfasst, zum Befestigen und Betreiben der Vorrichtung auf einem Darstellungs-Gehäuse mit einer Befestigungswand (40) mit einer vorderen Fläche und einer hinteren Fläche, wobei das Verfahren umfasst:
Befestigen eines ersten Stiftes (75 oder 76) an die elektrisch betriebene Vorrichtung (24) in einer ausgewählten Position relativ zu den komplementär zusammenpassenden Kontakten;
Befestigen eines oder mehrerer Strom-Verteil-Elemente (80), die Strom-Verteil-Kontakte an der hinteren Fläche der Befestigungswand in einer ausgewählten Anordnung umfassen;
Bilden einer Reihe von Öffnungen in der Befestigungswand, die ausgelegt sind, um den Stift der elektrisch betriebenen Vorrichtung bei Aufnahme aufzunehmen und zurückzuhalten;
Anordnen der gebildeten Öffnungen (42) an der Befestigungswand des Gehäuses in einer Anordnung, die komplementär zu der ausgewählten Anordnung der Strom-Verteil-Elemente (80) ist, die an der Rückseite befestigt sind, so dass die zusammenpassenden Kontakte der elektrisch betriebenen Vorrichtung in Eingriff mit den Strom-Verteil-Kontakten bei Aufnahme des Stiftes durch eine erste Öffnung, die in der Wand ausgebildet ist, geführt oder geleitet wird; und, wobei eine der elektrisch betriebenen Vorrichtungen und die Befestigungswand (40) einen zweiten Stift (75 oder 76) umfasst; und
wobei die andere der elektrisch betriebenen Vorrichtungen und der Befestigungswand eine zweite Öffnung (42) umfasst, die den zweiten Stift simultan bei Aufnahme des ersten Stiftes über die erste Öffnung aufnimmt; und
wobei die ersten und zweiten Stifte und die ersten und die zweiten Öffnungen derart angeordnet sind, so dass die komplementär zusammenpassenden Kontakte und die Strom-Verteil- und Erdungs-Kontakte in Eingriff miteinander bei Aufnahme der ersten und zweiten Stifte innerhalb deren korrespondierenden ersten und zweiten Öffnungen geführt werden.

19. Verfahren gemäß Anspruch 18, weiter umfassend:
Bereitstellen des Strom-Verteil-Elementes mit einem Erdungskontakt; und
Führen eines zusammenpassenden Kontaktes der elektrisch betriebenen Vorrichtung in Eingriff mit dem Erdungs-Kontakt des Strom-Verteil-Elementes, bevor die anderen zusammenpassenden Kontakte in Eingriff mit den Strom-Verteil-Kontakten beim Einführen geführt werden.

20. Verfahren gemäß Anspruch 18, weiter umfassend Bilden der ersten Öffnung (42) in einer Konfiguration, die eine seitliche oder axiale Bewegung des Stiftes aus der ersten Öffnung bei Aufnahme des Stiftes innerhalb der ersten Öffnung verhindert.

## Revendications

1. Système de montage et de distribution d'énergie électrique, le système comprenant :
un boîtier comprenant une paroi de montage (40) ayant un côté avant, un côté arrière et une pluralité d'ouvertures (42) agencées selon une configuration sélectionnée ;
un élément (80) de fourniture d'énergie monté sur le côté arrière de la paroi de montage, l'élément de fourniture d'énergie comportant des contacts de fourniture d'énergie et un contact avec la terre alignés avec la pluralité d'ouvertures (42) dans la paroi de montage et agencés sur l'élément de fourniture d'énergie selon un agencement sélectionné ;
un ou plusieurs dispositifs à commande électrique (24) comportant des contacts d'accouplement complémentaires (94, 96, 98) se projetant du dispositif à commande électrique selon un agencement qui est complémentaire à l'agencement sélectionné des contacts (84, 86) de fourniture d'énergie et des contacts avec la terre (88) de l'élément de fourniture d'énergie ;
chaque dispositif à commande électrique pouvant être monté dans une position stable sur le côté avant de la paroi de montage de sorte que les contacts d'accouplement (94, 96, 98) se projetant du dispositif à commande électrique (24) s'étendent à travers l'une des ouvertures (42) dans la paroi de montage (40) et s'engagent avec un contact (84, 86) de fourniture d'énergie et un contact avec la terre (88) correspondants de l'élément de fourniture d'énergie lorsque le dispositif à commande électrique est entièrement monté dans la position stable ; et,
où l'un des dispositifs à commande électrique et la paroi de montage ont une tige principale (75 ou 76) ;
l'autre des dispositifs à commande électrique et la paroi de montage ayant une ouverture principale (42) qui est adaptée pour recevoir la tige principale et l'empêcher d'avoir un mouvement latéral ou axial à l'extérieur de l'ouverture principale ; et
l'un des dispositifs à commande électrique (24) et la paroi de montage (40) ont une deuxième tige (75 ou 76) ;
l'autre du dispositif à commande électrique et de la paroi de montage ayant une deuxième ouverture (42) qui reçoit la deuxième tige simultanément dès réception de la tige principale par l'ouverture principale ; et,
la tige principale et la deuxième tige et l'ouverture principale et la deuxième ouverture étant agencées de sorte que les contacts d'accouplement complémentaires et les contacts avec la terre et les contacts de fourniture d'énergie soient guidés en engagement les uns avec les autres lors de la réception de la tige principale et de la deuxième tige dans leurs ouverture principale et deuxième ouverture correspondantes.

2. Système de la revendication 1, dans lequel les éléments (80) de fourniture d'énergie sont montés sur le côté arrière de la paroi de montage (40) et les contacts de fourniture d'énergie et le contact avec la terre sont tous agencés de sorte à empêcher un engagement manuel avec les contacts de fourniture d'énergie à travers une ouverture (42) à partir d'une position depuis le côté avant de la paroi de montage (40).

3. Système de la revendication 1, dans lequel la tige principale (75 ou 76) comprend un arbre (78) et une tête (77) reliée à l'extrémité de l'arbre, l'arbre et la tête ayant des configurations sélectionnées, l'ouverture principale (42) ayant une première partie complémentaire de la configuration de la tête pour recevoir la tête et une deuxième partie complémentaire de la configuration de l'arbre pour recevoir l'arbre ; et,
la tête de la tige principale formant un ajustement avec serrage contre la deuxième partie de l'ouverture principale pour monter l'élément de support du dispositif à commande électrique sur la paroi.

4. Système de la revendication 1, dans lequel :
le dispositif à commande électrique comprend une ferrure à commande électrique montée sur un élément de support ;
la tige principale (75 ou 76) étant reliée de manière rigide à l'élément de support et l'ouverture principale (42) est formée dans la paroi du boîtier ; et,
l'ouverture principale (42), la tige (75 ou 76) et l'élément (80) de fourniture d'énergie étant agencés les uns par rapport aux autres de sorte que les contacts d'accouplement complémentaires soient engagés avec les contacts avec la terre et les contacts de fourniture d'énergie lors de la réception de la tige principale dans l'ouverture principale.

5. Système de la revendication 1, dans lequel la tige principale (75 ou 76) est reliée de manière rigide au dispositif à commande électrique et l'ouverture principale est formée dans la paroi de montage, la tige principale recevant les contacts d'accouplement complémentaires du dispositif à commande électrique, les contacts d'accouplement complémentaires étant reçus dans l'ouverture principale en même temps que la réception de la tige principale dans l'ouverture principale.

6. Système de la revendication 1, dans lequel les tiges sont fixées au dispositif à commande électrique et les ouvertures sont disposées dans la paroi du boîtier.

7. Système de la revendication 1, dans lequel la pluralité d'ouvertures (42) disposées dans la paroi de montage (40) sont agencées de sorte que la tige principale et les deuxièmes tiges (75 ou 76) du dispositif à commande électrique puissent être reçues dans une pluralité de paires différentes de la pluralité d'ouvertures, d'autres éléments de fourniture d'énergie étant montés sur le côté arrière de la paroi de montage selon un agencement facilitant l'engagement des contacts d'accouplement avec des contacts de fourniture d'énergie par l'intermédiaire de chacune de la pluralité d'ouvertures.

8. Système de la revendication 1, dans lequel le dispositif à commande électrique a une troisième tige, les contacts d'accouplement complémentaires étant reçus dans la troisième tige, la troisième tige pouvant être reçue à travers une ouverture complémentaire formée dans la paroi du boîtier, l'ouverture principale, la deuxième ouverture et l'ouverture complémentaire étant agencées sur la paroi et la tige principale, la deuxième tige et la troisième tige étant agencées sur l'élément de support de sorte que les tiges puissent être reçues dans les ouvertures pour amener ou guider les contacts d'accouplement complémentaires en engagement avec les contacts de fourniture d'énergie en même temps que la réception des tiges dans les ouvertures.

9. Système de la revendication 8, dans lequel la paroi de montage (40) a une pluralité d'ouvertures (42) disposées dans la paroi selon un agencement tel que l'ouverture principale, la deuxième ouverture et l'ouvertures complémentaire du dispositif à commande électrique puissent être reçues dans plusieurs ensembles différents de trois ouvertures parmi la pluralité d'ouvertures.

10. Système de la revendication 8, dans lequel au moins deux des tiges et les ouvertures respectives dans lesquelles les au moins deux tiges sont reçues, sont adaptées pour recevoir les au moins deux tiges et les empêcher d'avoir un mouvement latéral ou axial à l'extérieur des ouvertures respectives.

11. Système de la revendication 1, dans lequel le système comporte au moins deux éléments (80) de fourniture d'énergie agencés sur le côté arrière de la paroi de montage (40) de sorte qu'au moins deux dispositifs à commande électrique puissent être indépendamment montés dans une position stable sur le côté avant du montage où les contacts d'accouplement complémentaires des deux dispositifs à commande électrique sont tous engagés avec un contact avec la terre et un contact de fourniture d'énergie correspondant des deux éléments respectifs de fourniture d'énergie lorsque chacun des au moins deux dispositifs à commande électrique sont entièrement montés dans une position stable sur le côté avant de la paroi de montage.

12. Système de la revendication 11, dans lequel chacun des contacts de fourniture d'énergie de chacun des éléments de fourniture d'énergie est relié à une source commune d'énergie électrique.

13. Système de la revendication 1, dans lequel les contacts d'accouplement complémentaires du dispositif à commande électrique comportent un mécanisme à ressort qui maintient les contacts d'accouplement engagés avec le contact avec la terre et le contact de fourniture d'énergie.

14. Système de la revendication 1, dans lequel la paroi de montage comprend une feuille mince de matériau rigide ayant une hauteur et une largeur et une ou plusieurs contrefiches disposées à des positions verticalement plus espacées sur la hauteur, les contrefiches étant fixées à plusieurs positions s'étendant sur la largeur de la feuille.

15. Système de la revendication 1, dans lequel l'agencement sélectionné des contacts de fourniture d'énergie et du contact avec la terre de l'élément de fourniture d'énergie électrique est sélectionné de sorte que le contact avec la terre de l'élément de fourniture d'énergie s'engage avec un contact d'accouplement complémentaire du dispositif à commande électrique avant que les contacts de fourniture d'énergie de l'élément de fourniture d'énergie ne s'engagent avec un contact d'accouplement complémentaire du dispositif à commande électrique pendant le montage du dispositif à commande électrique sur le côté avant de la paroi de montage.

16. Système de la revendication 1, dans lequel le logement comporte un câblage électrique monté dans, sur ou au boîtier de sorte que la paroi de montage, les éléments de fourniture d'énergie et le câblage électrique forment un système logé interconnecté, le câblage électrique interconnectant chacun des éléments de fourniture d'énergie à une source commune d'énergie.

17. Système de la revendication 1, dans lequel une pluralité de dispositifs à commande électrique peuvent être montés sur la paroi de montage, chacun de la pluralité de dispositifs à commande électrique ayant une tige principale et une deuxième tige qui peuvent être reçues dans plusieurs ensembles différents d'ouvertures complémentaires dans la paroi de montage.

18. Procédé de montage d'un dispositif à commande électrique (24) ayant des contacts de réception d'énergie (94, 96) destinés au montage et à l'alimentation du dispositif sur un boîtier d'affichage ayant une paroi de montage (40) qui a une surface avant et une surface arrière, le procédé comprenant le fait :
de fixer une tige principale (75 ou 76) au dispositif à commande électrique (24) dans une position sélectionnée par rapport aux contacts d'accouplement complémentaires ;
de monter un ou plusieurs éléments (80) de fourniture d'énergie ayant des contacts de fourniture d'énergie sur la surface arrière de la paroi de montage selon un agencement sélectionné ;
de former une série d'ouvertures dans la paroi de montage qui sont adaptées pour recevoir et retenir la tige du dispositif à commande électrique lors de la réception ;
d'agencer les ouvertures formées (42) sur la paroi de montage du boîtier selon un agencement qui est complémentaire de l'agencement sélectionné des éléments (80) de fourniture d'énergie montés sur la surface arrière de sorte que les contacts d'accouplement du dispositif à commande électrique soient guidés ou amenés en engagement avec les contacts de fourniture d'énergie en même temps que la réception de la tige à travers une ouverture principale formée dans la paroi ; et, où l'un des dispositifs à commande électrique (24) et la paroi de montage (40) ont une deuxième tige (75 ou 76) ;
l'autre des dispositifs à commande électrique et la paroi de montage ayant une deuxième ouverture (42) qui reçoit la deuxième tige simultanément dès réception de la tige principale par l'ouverture principale ; et,
la tige principale et la deuxième tige et l'ouverture principale et la deuxième ouverture étant agencées de sorte que les contacts d'accouplement complémentaires et les contacts avec la terre et les contacts de fourniture d'énergie soient guidés en engagement les uns avec les autres lors de la réception de la tige principale et de la deuxième tige dans leurs ouverture principale et deuxième ouverture correspondantes.

19. Procédé de la revendication 18 comprenant en outre le fait :
de doter l'élément de fourniture d'énergie avec un contact avec la terre ; et,
de guider un contact d'accouplement du dispositif à commande électrique en engagement avec le contact avec la terre de l'élément de fourniture d'énergie avant de guider les autres contacts d'accouplement dans leur engagement avec les contacts de fourniture d'énergie pendant l'insertion.

20. Procédé de la revendication 18 comprenant en outre le fait de former l'ouverture principale (42) dans une configuration qui empêche le mouvement latéral ou axial de la tige à l'extérieur de l'ouverture principale dès réception de la tige dans l'ouverture principale.
